# EUROPEAN PATENT APPLICATION

(11) **EP 4 568 325 A1**
(43) Date of publication of application: **11.06.2025**
(21) Application number: 23870170.0
(22) Date of filing: 04.09.2023
(51) Int. Cl.: H04W 24/06, G06N 3/08

(54) **COMMUNICATION METHOD AND APPARATUS**

(30) Priority: 27.09.2022 CN 202211186062
(71) Applicant: Huawei Technologies Co., Ltd., Shenzhen, Guangdong 518129 (CN)
(72) Inventor: ZENG, Yu, Shenzhen, Guangdong 518129 (CN); GENG, Tingting, Shenzhen, Guangdong 518129 (CN)
(74) Representative: Goddar, Heinz J.
(86) International application number: PCT/CN2023/116672
(87) International publication number: WO 2024/066930

(57) **Abstract**

This application relates to the field of communication technologies, and provides a communication method and apparatus, to improve network performance. A first network element obtains a to-be-input first measurement quantity, and obtains a first AI model. Then, the first network element inputs the to-be-input first measurement quantity into the first AI model, to obtain a first policy output by the first AI model. Next, the first network element executes the first policy. Then, when determining that an exception occurs when the first policy is executed, the first network element sends, to a second network element, indication information indicating that the exception occurs when the first policy is executed. A network element may perceive an execution status of executing, by another network element, a policy obtained based on an AI model, so that network performance can be improved to some extent. Especially, when determining that the exception occurs when the first policy is executed, the network element notifies this situation to the another network element, so that the another network element can make a response based on the exception, thereby improving network performance.

## Description

### CROSS-REFERENCE TO RELATED APPLICATIONS

This application claims priority to Chinese Patent Application No. 202211186062.7, filed with the China National Intellectual Property Administration on September 27, 2022 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

Artificial intelligence (artificial intelligence, AI) is a technology that simulates a human brain to perform complex computing. Applying AI to wireless communication can improve network performance and user experience by intelligently collecting and analyzing data. A training process of an AI model may be performed on a core network device or an access network device. The access network device may obtain an energy saving policy, a load balancing policy, and the like by using a trained AI model, and execute a corresponding policy. Currently, each access network device independently determines a policy based on an AI model and executes the policy, limiting improvement of network performance.

### SUMMARY

Embodiments of this application provide a communication method and apparatus, to improve network performance.

According to a first aspect, a communication method is provided. The method may be performed by a first network element, or a component, for example, a chip or a processor, used in the first network element. The following provides descriptions by using an example in which the method is performed by the first network element. First, the first network element obtains a to-be-input first measurement quantity, and obtains a first AI model. Then, the first network element inputs the first measurement quantity into the first AI model, to obtain a first policy output by the first AI model. Next, the first network element executes the first policy. Then, when determining that an exception occurs when the first policy is executed, the first network element sends indication information to a second network element, where the indication information indicates that the exception occurs when the first policy is executed.

When executing the first policy determined based on the first AI model, the first network element may detect an execution status, and notify the second network element of the execution status. In this way, a network element may perceive an execution status of executing, by another network element, a policy obtained based on an AI model, so that network performance can be improved to some extent. Especially, when determining that the exception occurs when the first policy is executed, the network element notifies this situation to the another network element, so that the another network element can make a response based on the exception, thereby improving network performance.

The first network element is a first access network device, and the second network element is a core network element or an operation, administration, and maintenance OAM network element; the first network element is a first terminal device, and the second network element is an access network device; the first network element is a first access network device, and the second network element is a second access network device; or the first network element is a first terminal device, and the second network element is a second terminal device.

In a possible implementation, a type of the first policy includes any one of the following: an energy saving policy, a load balancing policy, a mobility optimization policy, a channel state information-reference signal CSI-RS feedback enhancement policy, a beam management enhancement policy, or a positioning accuracy enhancement policy.

In a possible implementation, the indication information indicating that the exception occurs when the first policy is executed includes one or more of the following: an indication of the execution exception, time at which the execution exception occurs, a cause of the execution exception, a measurement parameter used for determining that the exception occurs on the policy, a configuration parameter used for determining that the exception occurs on the policy, effective time of the configuration parameter, a correction manner that the first network element expects to use for the execution exception, information needed for the correction manner that the first network element expects to use for the execution exception, an identifier of the first AI model, a parameter of the first AI model, an identifier of the first policy, the first policy, or effective time of the first policy. One or more pieces of parameter information are used, so that the second network element can more clearly know a related case of the exception, to make a more proper response measure.

In a possible implementation, the first network element receives first information from the second network element, where the first information indicates a correction manner that is allowed to be used for the execution exception; and the first network element corrects, based on the correction manner, the exception generated on the first policy. The second network element may serve as a manager or a decision maker to notify the first network element of the correction manner that is allowed to be used by the first network element, and the first network element properly corrects the exception, to further improve the network performance.

In a possible implementation, the correction manner that is allowed to be used includes: executing a second policy, where the second policy is a policy obtained based on non-AI, and the second policy and the first policy are of a same type. This may be understood as that the correction manner that is allowed to be used is executing a conventional policy (where the second policy is the conventional policy), instead of a policy obtained based on AI. That the first network element corrects, based on the correction manner, the exception generated on the first policy includes: The first network element skips the first policy, and executes the second policy.

In a possible implementation, the correction manner that is allowed to be used includes: executing a third policy, where the third policy is a policy determined based on a second AI model, and the third policy and the first policy are of a same type. This may be understood as that the correction manner that is allowed to be used is determining a new AI policy (where the third policy is the new AI policy) by using a new AI model (where the second model is the new AI model). The third policy may be obtained in the following manner: A to-be-input second measurement quantity is input into the second AI model, to obtain the third policy output by the second AI model. That the first network element corrects, based on the correction manner, the exception generated on the first policy includes: The first network element skips the first policy, and executes the third policy.

In a possible implementation, the correction manner that is allowed to be used includes: executing a fourth policy, where the fourth policy is a policy executed before the first policy, and the fourth policy and the first policy are of a same type. This may be understood as that the correction manner that is allowed to be used is falling back to a previously executed policy (where the fourth policy is the previously executed policy). That the first network element corrects, based on the correction manner, the exception generated on the first policy includes: The first network element skips the first policy, and executes the fourth policy.

In a possible implementation, the correction manner that is allowed to be used includes: skipping executing a policy of a same type as the first policy. This may be understood as that the correction manner that is allowed to be used is exiting the first policy. That the first network element corrects, based on the correction manner, the exception generated on the first policy includes: The first network element exits the first policy.

In a possible implementation, when the correction manner that is allowed to be used is executing the third policy, the first information includes at least one of the following: an identifier of the third policy, the third policy, an identifier of the second AI model, a parameter of the second AI model, or performance information of a third network element, where the performance information of the third network element is used for determining the third policy.

In a possible implementation, that the first network element corrects, based on the correction manner, the exception generated on the first policy includes: When the first information includes the identifier of the third policy, the first network element executes the third policy indicated by the identifier of the third policy, to correct the exception generated on the first policy.

In a possible implementation, that the first network element corrects, based on the correction manner, the exception generated on the first policy includes: When the first information includes the third policy, the first network element executes the third policy, to correct the exception generated on the first policy.

In a possible implementation, that the first network element corrects, based on the correction manner, the exception generated on the first policy includes: When the first information includes the identifier of the second AI model, the first network element obtains the second AI model based on the identifier, inputs a second measurement quantity into the second AI model, to obtain the third policy, and executes the third policy, to correct the exception generated on the first policy, where the second measurement quantity is the same as the first measurement quantity, or measurement time of the second measurement quantity is not earlier than measurement time of the first measurement quantity.

In a possible implementation, that the first network element corrects, based on the correction manner, the exception generated on the first policy includes: When the first information includes the parameter of the second AI model, the first network element inputs a second measurement quantity into the second AI model corresponding to the parameter, to obtain the third policy, and executes the third policy, to correct the exception generated on the first policy, where the second measurement quantity is the same as the first measurement quantity, or measurement time of the second measurement quantity is not earlier than measurement time of the first measurement quantity.

In a possible implementation, that the first network element corrects, based on the correction manner, the exception generated on the first policy includes: When the first information includes the performance information of the third network element, the first network element corrects the first AI model based on the performance information, to obtain the second AI model, inputs a third measurement quantity into the second AI model, to obtain the third policy, and executes the third policy, to correct the exception generated on the first policy, where the third measurement quantity is the same as the first measurement quantity, or measurement time of the third measurement quantity is not earlier than measurement time of the first measurement quantity.

According to a second aspect, a communication method is provided. The method may be performed by a second network element, or a component, for example, a chip or a processor, used in the second network element. The following provides descriptions by using an example in which the method is performed by the second network element. First, the second network element receives indication information from a first network element, where the indication information indicates that an exception occurs when the first network element executes a first policy, and the first policy is a policy output by a first AI model after the first network element inputs a to-be-input first measurement quantity into the first AI model; and the second network element sends second information to a third network element, where the second information indicates that the exception occurs when the first policy is executed or an exception occurs when a first-type policy output by the first AI model is executed, and a type of the first policy is a first type.

A network element may perceive an execution status of executing, by another network element, a policy obtained based on an AI model, so that network performance can be improved to some extent. Specifically, when determining that the exception occurs when the first policy is executed, the first network element notifies the second network element of this case, and the second network element makes a response based on the exception. To be specific, the second network element notifies the third network element that the exception occurs when the first policy is executed or the exception occurs when the first-type policy obtained based on AI is executed, so that the third network element makes a response. In this way, the network performance is improved.

The first network element is a first access network device, the second network element is a core network element or an operation, administration, and maintenance OAM network element, and the third network element is a second access network device; the first network element is a first terminal device, the second network element is an access network device, and the third network element is a second terminal device; or the first network element is a terminal device, the second network element is a first access network device, and the third network element is a second access network device.

In a possible implementation, the type of the first policy includes any one of the following: an energy saving policy, a load balancing policy, a mobility optimization policy, a channel state information-reference signal CSI-RS feedback enhancement policy, a beam management enhancement policy, or a positioning accuracy enhancement policy.

In a possible implementation, the indication information indicating that the exception occurs when the first policy is executed includes one or more of the following: an indication of the execution exception, time at which the execution exception occurs, a cause of the execution exception, a measurement parameter used for determining that the exception occurs on the policy, a configuration parameter used for determining that the exception occurs on the policy, effective time of the configuration parameter, a correction manner that the first network element expects to use for the execution exception, information needed for the correction manner that the first network element expects to use for the execution exception, an identifier of the first AI model, a parameter of the first AI model, an identifier of the first policy, or effective time of the first policy.

In a possible implementation, the third network element satisfies any one of the following conditions: The third network element is executing the policy output by the first AI model; the third network element is executing the first policy; or the third network element is executing a fifth policy, where the fifth policy and the first policy are of a same type.

In a possible implementation, the second network element determines a correction manner that is allowed to be used for the execution exception, and sends first information to the first network element, where the first information indicates the correction manner that is allowed to be used for the execution exception.

In a possible implementation, the correction manner that is allowed to be used includes: executing a second policy, where the second policy is a policy obtained based on non-AI, and the second policy and the first policy are of a same type; executing a third policy, where the third policy is a policy determined based on a second AI model, and the third policy and the first policy are of a same type; or executing a fourth policy, where the fourth policy is a policy executed before the first policy, and the fourth policy and the first policy are of a same type.

In a possible implementation, when the correction manner that is allowed to be used is executing the third policy, the first information includes at least one of the following: an identifier of the third policy, the third policy, an identifier of the second AI model, a parameter of the second AI model, or performance information of the third network element, where the performance information of the third network element is used for determining the third policy.

In a possible implementation, that the performance information of the third network element is used for determining the third policy includes: The performance information of the third network element is used for correcting the first AI model, and a corrected first AI model is used for determining the third policy.

In a possible implementation, the second network element receives the performance information from the third network element.

According to a third aspect, a communication method is provided. The method may be performed by a third network element, or a component, for example, a chip or a processor, used in the third network element. The following provides descriptions by using an example in which the method is performed by the third network element. First, the third network element receives second information from a second network element, where the second information indicates that an exception occurs when a first policy is executed or an exception occurs when a first-type policy output by a first AI model is executed, the first policy belongs to a first type, and the first policy is obtained based on the first AI model; and the third network element sends performance information of the third network element to the second network element, and/or determines whether an exception occurs on a policy executed by the third network element, where the performance information is used by a first network element to correct the first policy or correct the first AI model.

A network element may perceive an execution status of executing, by another network element, a policy obtained based on an AI model, so that network performance can be improved to some extent. Especially, when the exception occurs when the first policy is executed, the network element notifies this situation to the third network element, so that the third network element can make a response based on the exception, thereby improving network performance.

The second network element is a core network element or an operation, administration, and maintenance OAM network element, and the third network element is a second access network device; the second network element is an access network device, and the third network element is a second terminal device; or the second network element is a first access network device, and the third network element is a second access network device.

According to a fourth aspect, a communication method is provided. The method may be performed by a first network element, or a component, for example, a chip or a processor, used in the first network element. The following provides descriptions by using an example in which the method is performed by the first network element. First, the first network element obtains a to-be-input first measurement quantity and obtains a first AI model. Then, the first network element inputs the first measurement quantity into the first AI model, to obtain a first policy output by the first AI model. Then, the first network element executes the first policy. Next, when determining that an exception occurs when the first policy is executed, the first network element sends indication information to a third network element, where the indication information indicates that the exception occurs when the first policy is executed.

When executing the first policy determined based on the AI model, the first network element may detect an execution status, and notify a second network element of the execution status. In this way, a network element may perceive an execution status of executing, by another network element, a policy obtained based on an AI model, so that network performance can be improved to some extent. Especially, when determining that the exception occurs when the first policy is executed, the network element notifies this situation to the another network element, so that the another network element can make a response based on the exception, thereby improving network performance.

The first network element is a first terminal, and the second network element is a second terminal; or the third network element is a first access network device, and the third network element is a second access network device.

In a possible implementation, the first network element receives performance information from the third network element, and corrects the first policy or the first AI model based on the performance information of the third network element.

According to a fifth aspect, a communication method is provided. The method may be performed by a third network element, or a component, for example, a chip or a processor, used in the third network element. The following provides descriptions by using an example in which the method is performed by the third network element. First, the third network element receives, from a first network element, indication information indicating that an exception occurs when the first network element executes a first policy, where the first policy is a policy output by a first AI model after the first network element inputs a to-be-input first measurement quantity into the first AI model. Then, the third network element determines whether an exception occurs on a policy executed by the third network element and/or the third network element sends performance information of the third network element to the first network element, where the performance information is used by the first network element to correct the first policy or correct the first AI model.

A network element may perceive an execution status of executing, by another network element, a policy obtained based on an AI model, so that network performance can be improved to some extent. Especially, when the exception occurs on the policy, the network element notifies this situation to the third network element, so that the third network element can make a response based on the exception, thereby improving network performance.

The first network element is a first terminal, and a second network element is a second terminal; or the third network element is a first access network device, and the third network element is a second access network device.

According to a sixth aspect, a communication apparatus is provided. The apparatus has functions of implementing any one of the foregoing aspects and the possible implementations of the foregoing aspects. The functions may be implemented by hardware, or may be implemented by hardware by executing corresponding software. The hardware or software includes one or more functional modules corresponding to the foregoing functions.

According to a seventh aspect, a communication apparatus is provided, includes a processor, and optionally, further includes a memory. The processor is coupled to the memory. The memory is configured to store computer programs or instructions. The processor is configured to: execute some or all of the computer programs or the instructions in the memory, and when some or all of the computer programs or the instructions are executed, implement a function in the method according to any one of the foregoing aspects and the possible implementations of the foregoing aspects.

In a possible implementation, the apparatus may further include a transceiver. The transceiver is configured to: send a signal processed by the processor, or receive a signal input into the processor. The transceiver may perform a sending action or a receiving action in any one of the aspects and the possible implementations of the aspects.

According to an eighth aspect, this application provides a chip system. The chip system includes one or more processors (which may also be referred to as processing circuits). The processor is electrically coupled to a memory (which may also be referred to as a storage medium). The memory may be located in the chip system, or may not be located in the chip system. The memory is configured to store computer programs or instructions. The processor is configured to: execute some or all of the computer programs or the instructions in the memory, and when some or all of the computer programs or the instructions are executed, implement a function in the method according to any one of the foregoing aspects and the possible implementations of the foregoing aspects.

In a possible implementation, the chip system may further include an input/output interface (which may also be referred to as a communication interface). The input/output interface is configured to: output a signal processed by the processor, or receive a signal input into the processor. The input/output interface may perform a sending action or a receiving action in any one of the aspects and the possible implementations of the aspects. Specifically, the output interface performs the sending action, and the input interface performs the receiving action.

In a possible implementation, the chip system may include a chip, or may include a chip and another discrete device.

According to a ninth aspect, a computer-readable storage medium is provided, and is configured to store a computer program. The computer program includes instructions for implementing a function in any one of the aspects and the possible implementations of the aspects.

Alternatively, a computer-readable storage medium is provided, and is configured to store a computer program. When the computer program is executed by a computer, the computer may be enabled to perform the method according to any one of the foregoing aspects and the possible implementations of the foregoing aspects.

According to a tenth aspect, a computer program product is provided. The computer program product includes computer program code. When the computer program code is run on a computer, the computer is enabled to perform the method according to any one of the foregoing aspects and the possible implementations of the foregoing aspects.

According to an eleventh aspect, a communication system is provided. The communication system includes a first network element that performs the method according to any one of the first aspect and the possible implementations of the first aspect and a second network element that performs the method according to any one of the second aspect and the possible implementations of the second aspect. Optionally, the communication system further includes a third network element that performs the method according to any one of the third aspect and the possible implementations of the third aspect.

According to a twelfth aspect, a communication system is provided. The communication system includes a first network element that performs the method according to any one of the fourth aspect and the possible implementations of the fourth aspect and a third network element that performs the method according to any one of the fifth aspect and the possible implementations of the fifth aspect.

For technical effects of the sixth aspect to the twelfth aspect, refer to the descriptions of the first aspect to the fifth aspect. Details are not repeated.

### BRIEF DESCRIPTION OF DRAWINGS

FIG. 1a is a diagram of a structure of a communication system according to an embodiment of this application;
FIG. 1b is a diagram of a structure of a communication system according to an embodiment of this application;
FIG. 2 is a diagram of an AI model application architecture according to an embodiment of this application;
FIG. 3 is a diagram of a communication procedure according to an embodiment of this application;
FIG. 4 is a diagram of a communication procedure according to an embodiment of this application;
FIG. 5 is a diagram of a structure of a communication apparatus according to an embodiment of this application; and
FIG. 6 is a diagram of a structure of a communication apparatus according to an embodiment of this application.

### DESCRIPTION OF EMBODIMENTS

To facilitate understanding of technical solutions in embodiments of this application, the following briefly describes a system architecture of a method provided in embodiments of this application. It may be understood that the system architecture described in embodiments of this application is intended to describe the technical solutions in embodiments of this application more clearly, and does not constitute a limitation on the technical solutions provided in embodiments of this application.

The technical solutions in embodiments of this application may be applied to various communication systems such as a satellite communication system and a conventional mobile communication system. The satellite communication system may be integrated with the conventional mobile communication system (namely, a terrestrial communication system). The communication system is, for example, a wireless local area network (wireless local area network, WLAN) communication system, a wireless fidelity (wireless fidelity, Wi-Fi) system, a long term evolution (long term evolution, LTE) system, an LTE frequency division duplex (frequency division duplex, FDD) system, an LTE time division duplex (time division duplex, TDD) system, a 5th generation (5th generation, 5G) system or new radio (new radio, NR) system, a 6th generation (6th generation, 6G) system, or another future communication system. The communication system further supports a communication system integrating a plurality of wireless technologies, for example, may be further used in a system that integrates a non-terrestrial network (non-terrestrial network, NTN) and a terrestrial mobile communication network, for example, an unmanned aerial vehicle, a satellite communication system, or high altitude platform station (high altitude platform station, HAPS) communication.

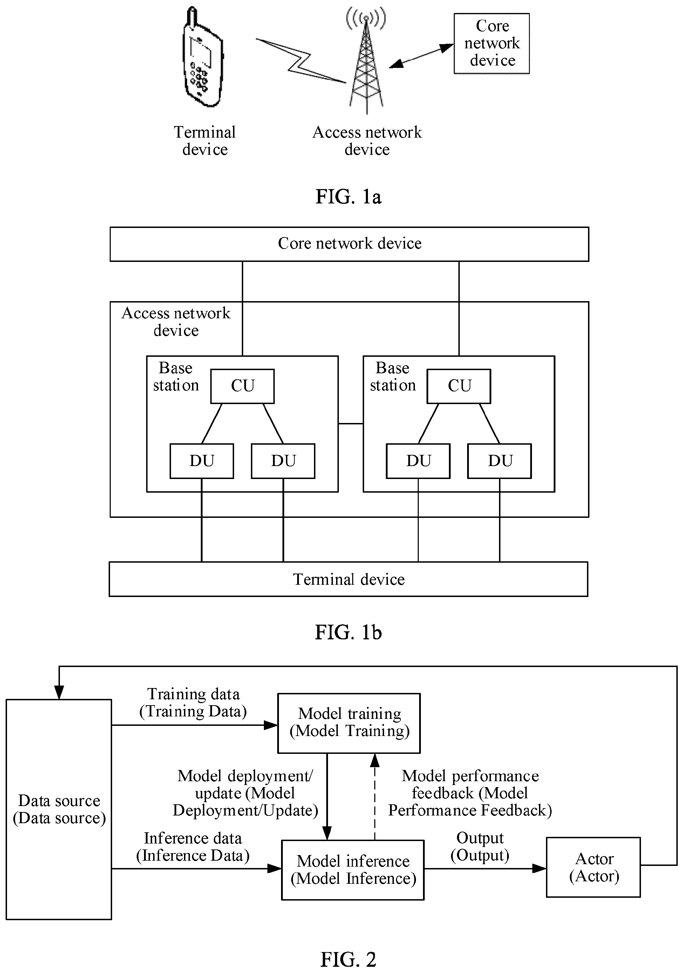

For example, FIG. 1a is a diagram of an architecture of a 5G communication system to which this application is applicable. The 5G communication system includes a terminal device, an access network device, and a core network device. The network device may communicate and interact with the core network device, to provide a communication service for the terminal device. The core network device is, for example, a device in a 5G core network (core network, CN). As a bearer network, the core network provides an interface to a data network, provides communication connection, authentication, management, and policy control for a user equipment (user equipment, UE), bears data services, and the like.

The terminal device (terminal device) may be a wireless terminal, may be a wired terminal, or may be referred to as a user equipment (user equipment, UE). The terminal device may be deployed on land, and includes an indoor or outdoor device, a handheld device, or a vehicle-mounted device; or may be deployed on water (for example, on a ship); or may be deployed in the air (for example, on an aircraft, a balloon, or a satellite). The terminal device may refer to a device that provides a user with voice and/or data connectivity, a handheld device with a wireless connection function, or another processing device connected to a wireless modem. The terminal device may communicate with one or more core networks via a radio access network. The terminal device may be a mobile phone (mobile phone), a tablet computer (tablet computer), a computer that has a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), or the like. The wireless terminal may be, for example, a mobile phone (or referred to as a "cellular" phone) or a computer with a mobile terminal, for example, may be a portable, pocket-sized, handheld, computer built-in, or vehicle-mounted mobile apparatus, which exchanges language and/or data with a radio access network. For example, the wireless terminal may be a device, like a personal communications service (personal communications service, PCS) phone, a cordless telephone, a session initiation protocol (session initiation protocol, SIP) phone, a wireless local loop (wireless local loop, WLL) station, or a personal digital assistant (personal digital assistant, PDA). The terminal may also be referred to as a system, a subscriber unit (subscriber unit, SU), a subscriber station (subscriber station, SS), a mobile station (mobile station, MB), a remote station (remote station, RS), an access point (access point, AP), a remote terminal (remote terminal, RT), an access terminal (access terminal, AT), a user terminal (user terminal, UT), or a user agent (user agent, UA).

A (R)AN device in this application is a device that provides a wireless communication function for the terminal device, and the (R)AN device is also referred to as an access network device. The RAN device in this application includes but is not limited to: a next generation base station (gNodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a transmission reception point (transmission reception point, TRP), a transmission point (transmission point, TP), a mobile switching center, and the like. In systems using different radio access technologies, a device having a function of a base station may be named differently. For example, the device is referred to as a RAN or a gNB (5G NodeB) in a 5th generation (5th generation, 5G) system, referred to as an evolved NodeB (evolved NodeB, eNB, or eNodeB) in an LTE system, and referred to as a NodeB (NodeB) in a 3rd generation (3rd generation, 3G) system.

As shown in FIG. 1b, the base station may be an architecture in which a central unit (central unit, CU) is separated from a distributed unit (distributed unit, DU). The RAN may be connected to a core network (where for example, the core network may be a long term evolution LTE core network, a 5G core network, or the like). It may be understood that the base station is divided into the CU and the DU from the perspective of a logical function. The CU and the DU may be physically separated or deployed together. A plurality of DUs may share one CU. One DU may alternatively be connected to a plurality of CUs (not shown in FIG. 1b). The CU and the DU may be connected through an interface, for example, an F1 interface. The CU and the DU may be divided based on a protocol layer of a wireless network. For example, a possible division manner is that the CU is configured to perform functions of a radio resource control (radio resource control, RRC) layer, a service data adaptation protocol (service data adaptation protocol, SDAP) layer, and a packet data convergence protocol (packet data convergence protocol, PDCP) layer, and the DU is configured to perform functions of a radio link control (radio link control, RLC) layer, a medium access control (medium access control, MAC) layer, a physical (physical) layer, and the like. It may be understood that, division into processing functions of the CU and the DU based on the protocol layers is merely an example, and there may be other division. For example, the CU or the DU may have functions of more protocol layers through division. For example, the CU or the DU may alternatively have some processing functions of the protocol layers through division. In a design, some functions of the RLC layer and functions of protocol layers above the RLC layer are set on the CU, and remaining functions of the RLC layer and functions of protocol layers below the RLC layer are set on the DU. In another design, functions of the CU or the DU may alternatively be obtained through division based on a service type or another system requirement. For example, division is performed based on a delay, a function whose processing time needs to satisfy a delay requirement is disposed on the DU, and a function whose processing time does not need to satisfy the delay requirement is disposed on the CU. In another design, the CU may alternatively have one or more functions of the core network. One or more CUs may be disposed in a centralized manner or a distributed manner. For example, the CUs may be disposed on a network side for ease of centralized management. The DU may have a plurality of radio frequency functions, or the radio frequency functions may be disposed remotely.

A function of the CU may be implemented by one entity or different entities. For example, the functions of the CU may be further divided, for example, separated into a control plane (control plane, CP) and a user plane (user plane, UP), namely, the control plane of the CU (CU-CP) and the user plane of the CU (CU-UP). For example, the CU-CP and the CU-UP may be implemented by different functional entities, and are connected through an E1 interface. The CU-CP and the CU-UP may be coupled to the DU to jointly complete a function of the base station. The control plane CU-CP of the CU further includes a further division architecture. In other words, an existing CU-CP is further divided into a CU-CP 1 and a CU-CP 2. The CU-CP 1 includes various radio resource management functions, and the CU-CP 2 includes only an RRC function and a PDCP-C function (that is, a basic function of control plane signaling at the PDCP layer).

The core network device may include one or more of the following network elements.

An access management network element (which may also be referred to as a mobility management network element, or an access and mobility management network element) is a control plane network element provided by an operator network, and is responsible for access control and mobility management for accessing the operator network by a terminal device, for example, including functions such as mobility state management, allocation of a temporary user identity, and user authentication. In a 5G communication system, the access management network element may be an access and mobility management function (access and mobility management function, AMF) network element. In a future communication system, the access management network element may still be an AMF network element, or may have another name. This is not limited in this application.

A session management network element is mainly responsible for session management in a mobile network, for example, session establishment, modification, and release. Specific functions are, for example, assigning an IP address to the user, and selecting a user plane network element that provides a packet forwarding function. In the 5G communication system, the session management network element may be a session management function (session management function, SMF) network element. In the future communication system, the session management network element may still be an SMF network element, or may have another name. This is not limited in this application.

A user plane network element is responsible for forwarding and reception of user data in a terminal device. The user plane network element may receive the user data from a data network, and transmit the user data to the terminal device through an access network device. In addition, the user plane network element may alternatively receive the user data from the terminal device through the access network device, and forward the user data to the data network. A transmission resource and a scheduling function in the user plane network element that provide a service for the terminal device are managed and controlled by the SMF network element. In the 5G communication system, the user plane network element may be a user plane function (user plane function, UPF) network element. In the future communication system, the user plane network element may still be a UPF network element, or may have another name. This is not limited in this application.

A data management network element is configured to generate an authentication credential, process a subscriber identifier (for example, store and manage a subscription permanent identifier), control access, manage subscription data, and the like. In the 5G communication system, the data management network element may be a unified data management (unified data management, UDM) network element. In the future communication system, the unified data management network element may still be a UDM network element, or may have another name. This is not limited in this application.

A policy control network element mainly supports providing a unified policy framework to control network behavior and providing a policy rule for a control layer network function, and is responsible for obtaining user subscription information related to a policy decision. In a 4G communication system, the policy control network element may be a policy and charging rules function (policy and charging rules function, PCRF) network element. In the 5G communication system, the policy control network element may be a policy control function (policy control function, PCF) network element. In the future communication system, the policy control network element may still be a PCF network element, or may have another name. This is not limited in this application.

A network repository network element may be configured to provide a network element discovery function and provide, based on a request from another network element, network element information corresponding to a network element type. The NRF further provides a network element management service, for example, network element registration, update, or deregistration, and network element status subscription and push. In the 5G communication system, the network repository network element may be a network repository function (network repository function, NRF) network element. In the future communication system, the network repository network element may still be an NRF network element, or may have another name. This is not limited in this application.

A network exposure network element is a control plane network element provided by an operator. The network exposure network element securely exposes an external interface of an operator network to a third party, and may be configured to securely expose, to the outside, a service, a capability, and the like that are provided by a 3rd generation partnership project (3rd generation partnership project, 3GPP) network function device. For example, when the session management network element needs to communicate with a third-party network element, the network exposure network element may serve as a relay for communication between the session management network element and the third-party network element. When the network exposure network element serves as the relay, the network exposure network element may translate identification information of a subscriber and identification information of the third-party network element. For example, when sending an SUPI of the subscriber from the operator network to the third party, the network exposure network element may translate the SUPI into an external identity (identity, ID) corresponding to the SUPI. On the contrary, when sending the external ID (a network element ID of the third party) to the operator network, the network exposure network element may translate the external ID into the SUPI. In the 5G communication system, the network exposure function network element may be a network exposure function (network exposure function, NEF) network element. In the future communication system, the network exposure function network element may still be an NEF network element, or may have another name. This is not limited in this application.

A network slice selection network element may be used for selecting a proper network slice for a service of a terminal. In the 5G communication system, the network slice selection network element may be a network slice selection function (network slice selection function, NSSF) network element. In the future communication system, the network exposure function network element may still be an NSSF network element, or may have another name. This is not limited in this application.

A network data analytics network element may collect data from each network function (network function, NF), for example, the policy control network element, the session management network element, the user plane network element, the access management network element, and the application function network element (via a network capability exposure function network element), and perform analysis and prediction. In the 5G communication system, the network data analytics network element may be a network data analytics function (network data analytics function, NWDAF). In the future communication system, the network exposure function network element may still be an NWDAF network element, or may have another name. This is not limited in this application.

A unified data repository network element is responsible for storing structured data information, including subscription information, policy information, and network data or service data defined in a standard format. In the 5G communication system, the unified data repository network element may be a unified data repository (unified data repository, UDR). In the future communication system, the network exposure function network element may still be a UDR network element, or may have another name. This is not limited in this application.

It may be understood that the network element may also be referred to as a "device", an "entity", or the like. The foregoing network elements or functions may be network elements in a hardware device, may be software functions running on dedicated hardware, or may be virtualized functions instantiated on a platform (for example, a cloud platform). One or more services may be obtained through division into the foregoing network elements or functions. Further, services that exist independently of network functions may occur. In this application, instances of the functions, instances of services included in the functions, or instances of the services that exist independently of the network functions may be referred to as service instances.

For ease of understanding embodiments of this application, the following describes an application scenario of this application. A network architecture and a service scenario described in embodiments of this application are intended to describe the technical solutions in embodiments of this application more clearly, and do not constitute any limitation on the technical solutions provided in embodiments of this application. A person of ordinary skill in the art may know that, as a new service scenario emerges, the technical solutions provided in embodiments of this application are also applicable to a similar technical problem.

The technical solutions in embodiments of this application may be applied to a scenario in which an AI policy is executed, are particularly applicable to a scenario in which performance degradation occurs when the AI policy is executed, and are not limited to a communication system.

FIG. 2 is a diagram of an AI model application architecture. A data source (Data source) is a terminal, an access network device, a gNB-CU, a gNB-DU, the operation, administration, and maintenance (operation, administration, and maintenance, OAM), another management entity, or the like that provides data (for example, network running data detected by an OAM, for example, network load and channel quality. A model training body analyzes (for example, performs model establishment, training approximation, and reinforcement learning on) training data (Training data) provided by the data source (Data source), to obtain a trained AI model. A model inference body uses the trained AI model to obtain reasonable prediction (for example, performance prediction, load prediction, and UE trajectory prediction on an access network side) based on inference data provided by the data source (Data source), to guide a network to perform policy adjustment and obtain a reasonable and efficient policy (for example, a saving policy or a mobility optimization policy). The policy adjustment is uniformly planned by an actor (Actor) entity, and an adjusted policy is sent to a plurality of network entities for execution. In addition, after the plurality of network entities execute the adjusted policy, related data of the network entities is collected into the data source (Data source) again.

In a wireless communication system, a training process of an AI model may be performed on the OAM, may be performed on the access network device, may be performed on the gNB-CU, may be performed on the terminal, or may be performed on an independent network element entity (for example, an intelligent control center on a RAN side (RAN intelligent controller, RIC)). A process of performing inference based on the AI model may be performed on the access network device, may be performed on the gNB-CU, may be performed on the terminal, or may be performed on an independent network element entity AIC. For example, the OAM and the access network device may exchange information, for example, model information and data used for model training, through a current northbound interface. The access network device and the gNB-CU may exchange information with another network element by reusing a current interface such as F1, Xn, or Uu. The network element entity AIC may establish a communication link, for example, a wired link or a wireless link, with another network element (for example, the OAM or the access network device) for communication. When a CP and a UP of the CU are separated, the CP is usually responsible for receiving of the AI model and functions of subsequent AI inference and policy generation. When a CU-CP is further divided into a CU-CP 1 and a CU-CP 2, the CU-CP 1 is usually responsible for receiving of the model, the function of the subsequent AI inference, and generation of specific interaction signaling, and the CU-CP 2 interacts with another network element.

For ease of understanding embodiments of this application, the following describes some terms in embodiments of this application, to help a person skilled in the art have a better understanding.
1. Energy saving (Energy Saving) policy: A specific parameter of the energy saving policy includes but is not limited to one or more of the following: which cell or cells are deactivated, which carrier or carriers are shut down (or turned on), which channel or channels are shut down (or turned on), which slot or slots are shut down (or turned on), an adjustment value of transmit power (where adjustment may be decreasing or increasing), and an adjusted transmit power value. The energy saving policy is applicable to an access network device. For example, the access network device collects load, energy consumption, and energy efficiency information of the access network device and a neighboring cell, trajectory information and a measurement result of a UE, and the like, predicts a load trend of the access network device, and takes, with reference to a cell usage, a KPI requirement, and the like, an energy saving measure in a timely and suitable manner without affecting network coverage and user access. A simplest energy saving policy includes directly deactivating a cell. Other energy saving policies include carrier shutdown, channel shutdown, slot shutdown, transmit power adjustment, and the like. A complex energy saving policy further includes a combination of the foregoing energy saving measures. An AI model may be used to predict load of each cell and formulate a proper energy saving policy, to reduce energy consumption of a base station or improve energy efficiency of the base station without affecting a user service and cell coverage. When the network coverage is affected or a UE access requirement or a service requirement cannot be satisfied, the current energy saving policy can be modified, or a non-energy saving status can be directly restored to a normal working status, and re-predicting the load or changing the used AI model to perform re-inference is considered.
2. Load balancing (Load Balancing) policy: A specific parameter of the load balancing policy includes but is not limited to one or more of the following: which UEs among UEs that access an access network device are selected, by the access network device, to be handed over to a neighboring access network device or a neighboring cell, a handover threshold for mutual handover between a cell of the current access network device (or a current cell) and the neighboring access network device (or the neighboring cell) or an adjustment value of the threshold, and a load trend of the access network device. The load balancing policy is applicable to the access network device. For example, the access network device collects load, energy consumption, and energy efficiency information of the access network device and the neighboring cell, trajectory information and a measurement result of a UE, and the like, predicts the load trend of the access network device, and properly selects, with reference to a cell usage, a KPI requirement, and the like, some UEs to be handed over to the neighboring cell or receives a UE from the neighboring cell. In this way, load levels of access network devices in an entire network area are close, and a case in which heavy load of some access network devices affects a normal service and resources of some access network devices are idle is reduced. However, prediction accuracy is not 100%. As a result, UE selection is improper or a target cell for handover is improper, and a handover failure occurs or a UE service is affected; a load balancing effect is poor due to inaccurate load prediction; or an original load balancing policy is no longer applicable due to a temporary exception change on the load. In this case, the current load balancing policy can be exited or modified, and re-predicting the load or changing a used AI model to perform re-inference is considered.
3. Mobility optimization (Mobility Optimization) policy: A specific parameter of the mobility optimization policy includes but is not limited to one or more of the following: a predicted trajectory of a UE, a handover time point, a target cell for handover, and the like. The mobility optimization policy is applicable to an access network device. For example, the access network device collects historical trajectory information of the UE, and predicts a future trajectory of the UE with reference to measurement information of the UE. Based on the predicted trajectory, whether the UE is handed over is determined in advance, a handover configuration is delivered in advance, and the target cell is instructed to prepare an access resource. This reduces a delay in a UE handover process and a probability of a handover or access failure. However, trajectory prediction accuracy is not 100%. As a result, when the predicted trajectory is incorrect, the UE handover fails, and a service is interrupted. In this case, performing model retraining and re-inference with reference to an exception may be considered, or changing a model may be considered, to prevent a similar exception from occurring on the UE again.
4. CSI-RS feedback enhancement (CSI-RS Feedback Enhancement) policy: A specific parameter of the CSI-RS feedback enhancement policy includes but is not limited to one or more of the following: a downlink channel matrix. A main procedure is as follows: First, an access network device and a UE first exchange a dictionary, where the dictionary is usually a model trained in advance by the access network device based on a UE capability and a requirement of the access network device, and then the access network device delivers an encoder tool and a quantizer tool to the UE. Then, based on the downlink channel matrix and the existing dictionary, the UE may compress and quantize a matrix to be fed back, and transfer a result to an access network device side. Next, the access network device side obtains an original channel matrix through reverse restoration based on the dictionary and data reported by the UE.
5. Beam management enhancement (Beam Management Enhancement) policy: A specific parameter of the beam management enhancement policy includes but is not limited to one or more of the following: a sparse matrix for sweeping. A main procedure is as follows: An access network device indicates a UE to perform beam sweeping based on the sparse matrix for sweeping, and the UE performs beam sweeping based on the matrix, and feeds back a sweeping result. The access network device obtains an optimal CSI-RS beam through inference based on the sparse sweeping result of the UE, and the UE starts to perform next-phase sweeping. The UE feeds back an ID of the optimal CSI-RS beam.
6. Positioning accuracy enhancement (Positioning Accuracy Enhancement) policy: A specific parameter of the positioning accuracy enhancement policy includes but is not limited to one or more of the following: a location of a UE. In comparison with a location of a UE determined in a conventional technology, in this technology, a more refined location is predicted. For example, the UE is located in a city or outdoors.

Embodiments of this application provide a plurality of communication methods. Network elements may exchange information about execution statuses of executing policies, and any network element may make a response policy based on an execution status of executing a policy by another network element. In this way, a plurality of network elements can execute better policies, and network performance is improved.

The following describes the technical solutions in embodiments of this application with reference to the accompanying drawings in embodiments of this application. Mutual reference may be made between embodiments/examples.

### Embodiment 1:

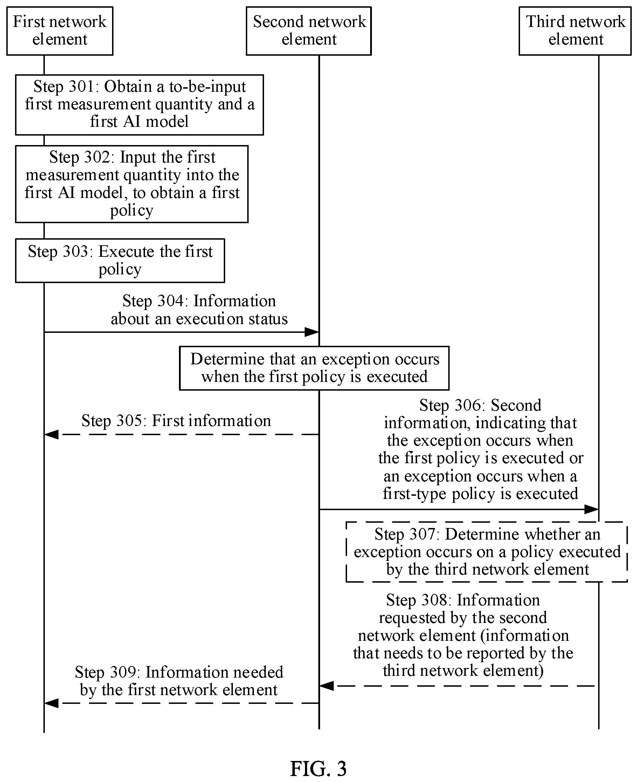

FIG. 3 is a diagram of a communication procedure. The communication procedure is applicable to but is not limited to any one of the following communication scenarios:
A first network element is a first access network device, a second network element is a core network device, and a third network element is a second access network device.

A first network element is a first access network device, a second network element is an OAM, and a third network element is a second access network device.

A first network element is a first terminal, a second network element is a first access network device, and a third network element is a second terminal.

A first network element is a first terminal, a second network element is a first access network device, and a third network element is a second access network device.

The access network device communicates with the core network device or the OAM through a northbound interface or an NG interface. The access network device may directly communicate with the OAM, or communicate with the OAM via the core network device (for example, an AMF). The access network devices communicate with each other through an Xn interface. The terminal communicates with the access network device through a Uu interface.

The first terminal or the second terminal may be the terminal device described in FIG. 1a or FIG. 1b. The first access network device or the second access network device may be the access network device described in FIG. 1a, or the gNB-CU, the gNB-CU-CP, the gNB-CU-CP 1, the gNB-CU-CP 2, or the gNB-DU described in FIG. 1b. The core network device may be any network element, for example, the AMF, the UDM, the SMF, the UPF, the PCF, the NEF, or the UDR, described in FIG. 1a or FIG. 1b.

The communication procedure includes the following steps.

Step 301: The first network element obtains a to-be-input first measurement quantity and obtains a first AI model.

The AI model is a model obtained based on artificial intelligence AI.

A model training body is not limited in this application. The first network element may train the first AI model based on the AI, or a device/network element other than the first network element may train the first AI model based on the AI, and send information about the first AI model (for example, a model parameter, where the model parameter may include but is not limited to one or more of the following parameters related to the model: a quantity of neurons at each layer such as an input layer, an output layer, or a hidden layer, a connection relationship, a weight value of each layer, and the like) to the first network element. For example, the second network element trains a model based on the AI, and sends information about a trained model to the first network element. The second network element may further send the information about the trained model to the third network element and/or another network element. For example, the first network element and the second network element train respective models based on the AI. For example, the first network element trains the model based on the AI, and sends a trained model to the second network element.

For a process of training the model based on the AI, refer to the descriptions in FIG. 2. Details are not described again. The trained model may have different usages, for example, energy saving, load balancing, mobility optimization, channel state information-reference signal CSI-RS feedback enhancement, beam management enhancement, and positioning accuracy enhancement.

When the first network element is the first access network device, the first measurement quantity includes but is not limited to one or more of the following: information measured by the first access network device, information measured by a neighboring access network device (neighboring to the first access network device) or a neighboring cell, information measured by a UE that accesses the first access network device, or information measured by a UE that accesses the neighboring access network device or the neighboring cell. It should be noted that the UE, the neighboring access network device, and the neighboring cell may send, to the first access network device, the information measured by the UE, the neighboring access network device, and the neighboring cell.

When the first network element is the first terminal, the first measurement quantity includes but is not limited to one or more of the following: information measured by an access network device accessed by the first terminal, information measured by a neighboring access network device (neighboring to the first access network device) or a neighboring cell of the access network device accessed by the first terminal, information measured by another UE that accesses the first access network device, or information measured by a UE that accesses the neighboring access network device or the neighboring cell. It should be noted that the neighboring access network device, the neighboring cell, and the another UE may send, to the first terminal, the information measured by the neighboring access network device, the neighboring cell, and the another UE.

The measured information is, for example, service information or load information.

Step 302: The first network element inputs the first measurement quantity into the first AI model, to obtain a first policy output by the first AI model.

A type of the first policy includes any one of the following: an energy saving policy, a load balancing policy, a mobility optimization policy, a channel state information-reference signal CSI-RS feedback enhancement policy, a beam management enhancement policy, or a positioning accuracy enhancement policy. For specific content (or a usage or a principle) of each type of policy, refer to the foregoing descriptions. Details are not described again.

Step 303: The first network element executes the first policy.

It may be understood that the first network element may execute one or more policies at specific time, and the first policy is one of the one or more policies. For any policy, the first network element may send, to the second network element, information about an execution status of executing the policy. In this application, the first policy is used as an example for description.

Step 304: The first network element sends, to the second network element, information about an execution status of executing the first policy.

Correspondingly, the second network element receives, from the first network element, the information about the execution status of executing the first policy by the first network element.

The information about the execution status indicates that an exception occurs or no exception occurs when the first network element executes the first policy.

The first network element notifies the second network element of the execution status of executing the first policy by the first network element, so that the second network element perceives the execution status of executing the policy by the first network element. Any network element may perform, based on an execution status of executing a policy by another network element, self-check or adjustment on a policy executed by the network element. In this way, a plurality of network elements can execute better policies, and network performance is improved.

The first network element may periodically determine the execution status of executing the first policy (that is, whether the execution is normal), where a periodicity may be one minute, five minutes, 10 minutes, or the like. Alternatively, the first network element may determine, based on event triggering (for example, a measurement quantity exceeds a specified threshold), the execution status of executing the first policy (that is, whether the execution is normal).

After determining the execution status, the first network element may send the information about the execution status to the second network element. Alternatively, if the first network element periodically sends the information about the execution status, after determining the execution status, the first network element may send the information about the execution status to the second network element when a next latest reporting periodicity moment arrives.

For example, a condition (or a criterion) used for determining whether an execution exception occurs on each type of policy is preconfigured in the first network element, and the first network element may determine, based on the condition (or the criterion), whether an exception occurs when each type of policy is executed.

When one or more of the following cases occur (which may also be understood as that one or more of the following conditions are satisfied), it is determined that an execution exception occurs on the energy saving policy, where the following plurality of cases are usually applicable to the scenario in which the first network element is the first access network device:
Load of the neighboring cell or the neighboring access network device is greater than or equal to a specified load threshold. For example, the specified threshold is 80%, 85%, or the like of maximum load. For example, the neighboring cell or the neighboring access network device may send, to the first access network device, information indicating that the load is excessively high. The first access network device receives, from the neighboring access network device or the neighboring cell, the information indicating that the load is excessively high, and a first access network device needs to modify the current energy saving policy, to migrate the load from the neighboring access network device or the neighboring cell to the first access network device, so that a load level of the neighboring access network device or the neighboring cell is reduced.

A quantity of accessing UEs and a service requirement exceed a bearing range in a current energy saving status. As a result, the UEs do not have abundant resources to access the first access network device or time for accessing the first access network device is excessively long. For example, a value of duration for accessing the first access network device by the terminal device is greater than or equal to a specified duration threshold. For example, a quantity of terminal devices fail to access the first access network device, where the quantity is greater than or equal to a specified quantity threshold. The specified quantity threshold may be a specific value, for example, 100 or 1000. Alternatively, the specified quantity threshold may be a proportion value, for example, a proportion of a maximum quantity of UEs that can access the first access network device.

A service of a UE in a cell of the first access network device cannot be normally performed. For example, an uplink rate of the terminal device that accesses the first access network device is less than or equal to a specified first rate threshold. For example, a downlink rate of the terminal device that accesses the first access network device is less than or equal to a specified second rate threshold. The rate threshold may be set for each service.

An effect of an AI-based energy saving policy is poor. For example, after the AI-based energy saving policy is executed, energy consumption of the first access network device is not reduced to an expected value, where for example, the expected value is a value less than 50% of energy consumption in a non-energy-saving status; energy efficiency (system load/overall energy consumption) does not reach an expected value, where for example, the expected value is a value greater than 150% of energy efficiency (system load/overall energy consumption) in a non-energy-saving status; or an effect of the AI-based energy saving policy is not as good as that of a conventional energy saving policy, where for example, the first access network device exits the AI-based energy saving policy at a specific periodicity (for example, half an hour), and when executing the conventional energy saving policy, the first access network device finds that energy consumption is low or energy efficiency is high. For example, the energy efficiency of the first access network device is less than or equal to a specified efficiency threshold. For another example, energy efficiency of executing the first policy by the first access network device is less than or equal to energy efficiency of executing a second policy by the first access network device or energy efficiency of not executing the energy saving policy by the first access network device, where the second policy is an energy saving policy obtained based on non-AI, and the second policy and the first policy are of a same type. The second policy may be understood as a conventional energy saving policy, instead of the energy saving policy obtained based on the AI.

When one or more of the following cases occur (which may also be understood as that one or more of the following conditions are satisfied), it is determined that an execution exception occurs on the load balancing policy, where the following plurality of cases are usually applicable to the scenario in which the first network element is the first access network device:
A difference between actual load and predicted load of the first access network device is excessively large. For example, the load difference between the actual load of the first access network device and the load predicted by the first access network device according to the first policy is greater than or equal to a specified first load difference threshold.

A difference between actual load and predicted load of the neighboring access network device (or the neighboring cell) is excessively large. For example, the load difference between the actual load of the neighboring cell or the neighboring access network device and the load predicted by the neighboring cell or the neighboring access network device is greater than or equal to a specified second load difference threshold. It may be understood that the neighboring access network device or the neighboring cell may send, to the first access network device, information indicating that the difference between the actual load and the predicted load is excessively large.

A load difference between the actual load of the first access network device and the actual load of the neighboring access network device is greater than or equal to a specified third load difference threshold. For example, a load ratio of the actual load of the first access network device to the actual load of the neighboring access network device continuously exceeds a specified ratio (for example, 3:1). It may be understood that the neighboring access network device or the neighboring cell may send the actual load to the first access network device.

Currently, an effect of an AI-based load balancing policy is poor, or is not as good as that of a conventional load balancing policy. For example, in a process of executing the AI-based load balancing policy, a conventional load balancing policy solution may be fallen back periodically or fallen back through event triggering (for example, when the load difference between the first access network device and the neighboring access network device (or the neighboring cell) is greater than a specific threshold). If a load balancing effect of the conventional load balancing policy solution is better than that of an AI-based load balancing policy solution (for example, the load ratio of the first access network device to the neighboring access network device (or the neighboring cell) is closer to 1:1), it may be considered that an exception occurs on the AI-based load balancing policy. For example, a first load difference is greater than a second load difference. The first load difference is a load difference between the actual load of the first access network device and the actual load of the neighboring access network device when the first access network device executes the first policy, the second load difference is a load difference between the actual load of the first access network device and the actual load of the neighboring access network device when the first access network device executes a second policy or does not execute the load balancing policy, the second policy is a load balancing policy obtained based on non-AI, and the second policy and the first policy are of a same type. The second policy may be understood as the conventional load balancing policy, instead of the load balancing policy obtained based on the AI.

Problems such as an RLF or a potential failure (SHR) occur on a UE. In a process of executing the load balancing policy, one of main procedures is to hand over the UE from an access network device with heavy load to an access network device with light load. However, it also needs to be ensured that a service of the UE is not affected and no link problem such as the RLF occurs. In a process of executing the AI-based load balancing policy, if more UE call drops occur, more potential failures occur, or a service capability (for example, a throughput) of the UE decreases in comparison with a process in which the AI-based load balancing policy has not been executed, it may be considered that an exception occurs on the AI-based load balancing policy. For example, a first throughput is less than a second throughput. The first throughput is a throughput of a terminal device that accesses the first access network device when the first access network device executes the first policy, the second throughput is a throughput of the terminal device that accesses the first access network device when the first access network device executes the second policy or does not execute the load balancing policy, the second policy is the load balancing policy obtained based on the non-AI, and the second policy and the first policy are of a same type. The second policy may be understood as the conventional load balancing policy, instead of the load balancing policy obtained based on the AI. For example, a first quantity is greater than a second quantity. The first quantity is a first quantity of terminal devices on which the radio link failure RLF, a radio link potential failure, or the call drop occurs in a terminal device handover process when the first access network device executes the first policy, the second quantity is a quantity of terminal devices on which the radio link failure RLF, the radio link potential failure, or the call drop occurs in the terminal device handover process when the first access network device executes the second policy or does not execute the load balancing policy, the second policy is the load balancing policy obtained based on the non-AI, and the second policy and the first policy are of a same type. The second policy may be understood as the conventional load balancing policy, instead of the load balancing policy obtained based on the AI.

When one or more of the following cases occur (which may also be understood as that one or more of the following conditions are satisfied), it is determined that an execution exception occurs on the mobility optimization policy, where the following plurality of cases are usually applicable to the scenario in which the first network element is the first access network device:
A mobility report that is from a SON or the like and that is received by the first access network device shows that a call drop rate does not decrease, a handover/access delay does not decrease, an access success rate does not increase, and the like. Based on a report reported by a UE, if after an AI-based mobility optimization policy is executed for a period of time (for example, five minutes), the report reported by the UE shows that the call drop rate does not decrease to a preset value (for example, decrease to 50% of a call drop rate when the mobility optimization policy is not executed), the handover/access delay does not decrease (for example, decrease to 50% of a handover/access delay when the mobility optimization policy is not executed), or the access success rate does not increase to a predicted value (for example, 150% of an access success rate when the mobility optimization policy is not executed), it may be considered that an exception occurs on the current AI-based mobility optimization policy.

For example, a call drop rate of a terminal device that accesses the first access network device is greater than or equal to a specified call drop rate threshold. For example, the threshold is 50% of the call drop rate when the mobility optimization policy is not executed. For example, a delay of handing over the terminal device from another access network device to the first access network device is greater than or equal to a specified delay threshold. For example, the threshold is 50% of the handover delay when the mobility optimization policy is not executed. For example, a delay of accessing the first access network device by the terminal device is greater than or equal to a specified delay threshold. For example, the threshold is 50% of the access delay when the mobility optimization policy is not executed. For example, an access success rate of accessing the first access network device by the terminal device is less than or equal to a specified threshold. For example, the threshold is 150% of the access success rate when the mobility optimization policy is not executed.

Efficiency of a mobility optimization policy solution is not as good as that of a conventional mobility optimization solution. For example, in a process of executing the AI-based mobility optimization policy, the conventional mobility optimization policy solution may be fallen back periodically or fallen back through event triggering (for example, when the call drop rate is greater than a specific threshold). If a handover effect of the conventional mobility optimization policy solution is better than that of the AI-based mobility optimization policy (for example, the call drop rate is lower), it may be considered that an exception occurs on the AI-based mobility optimization policy.

For example, a first call drop rate is greater than or equal to a second call drop rate. The first call drop rate is a call drop rate of a terminal device that accesses the first access network device when the first access network device executes the first policy, the second call drop rate is a call drop rate of the terminal device that accesses the first access network device when the first access network device executes a second policy or does not execute the mobility optimization policy, the second policy is a mobility optimization policy obtained based on non-AI, and the second policy and the first policy are of a same type. The second policy may be understood as a conventional mobility optimization policy, instead of the mobility optimization policy obtained based on the AI.

For example, a first handover delay is greater than or equal to a second handover delay. The first handover delay is a delay of handing over the terminal device from another access network device to the first access network device when the first access network device executes the first policy, the second handover delay is a delay of handing over the terminal device from the another access network device to the first access network device when the first access network device executes the second policy or does not execute the mobility optimization policy, the second policy is the mobility optimization policy obtained based on the non-AI, and the second policy and the first policy are of a same type. The second policy may be understood as the conventional mobility optimization policy, instead of the mobility optimization policy obtained based on the AI.

For example, a first access delay is greater than or equal to a second access delay. The first access delay is a delay of accessing the first access network device by the terminal device when the first access network device executes the first policy, the second access delay is a delay of accessing the first access network device by the terminal device when the first access network device executes the second policy or does not execute the mobility optimization policy, the second policy is the mobility optimization policy obtained based on the non-AI, and the second policy and the first policy are of a same type. The second policy may be understood as the conventional mobility optimization policy, instead of the mobility optimization policy obtained based on the AI.

For example, a first access success rate is less than or equal to a second access success rate. The first access success rate is an access success rate of accessing the first access network device by the terminal device when the first access network device executes the first policy, the second access success rate is an access success rate of accessing the first access network device by the terminal device when the first access network device executes the second policy or does not execute the mobility optimization policy, the second policy is the mobility optimization policy obtained based on the non-AI, and the second policy and the first policy are of a same type. The second policy may be understood as the conventional mobility optimization policy, instead of the mobility optimization policy obtained based on the AI.

It is determined, based on measurement information of a UE, that an actual trajectory of the UE is inconsistent with a predicted trajectory, and the like. For example, a movement trajectory of the terminal device predicted by the first access network device when the first access network device executes the first policy is different from an actual movement trajectory of the terminal device. For example, it is predicted that the trajectory of the UE is from a cell 1 to a cell 2, but based on a measurement result reported by the UE, the UE actually moves from the cell 1 to a cell 3. In this case, the prediction of the trajectory of the UE is inaccurate.

When one or more of the following cases occur (which may also be understood as that one or more of the following conditions are satisfied), it is determined that an execution exception occurs on the CSI-RS feedback enhancement policy, where the following plurality of cases are usually applicable to the scenario in which the first network element is the first terminal or the first access network device:
A downlink throughput of a UE does not reach an expected value, where for example, the expected value is 120% of a downlink throughput of the UE in a conventional CSI-RS feedback enhancement policy solution. Alternatively, a downlink throughput of a UE decreases, for example, decreases to 80% of a downlink throughput of the UE in a conventional CSI-RS feedback enhancement policy solution. For example, a throughput of a terminal device that accesses the first access network device is less than or equal to a specified throughput threshold.

If the first network element is the first access network device, the UE may send the throughput to the first access network device, so that the access network device performs determining.

When one or more of the following cases occur (which may also be understood as that one or more of the following conditions are satisfied), it is determined that an execution exception occurs on the CSI-RS feedback enhancement policy, where the following plurality of cases are usually applicable to the scenario in which the first network element is the first terminal or the first access network device:
Beam sweeping duration of a UE does not decrease to an expected value, where for example, the expected value is 80% of beam sweeping duration of the UE in a conventional beam sweeping solution. For example, a beam sweeping duration value of a terminal device that accesses the first access network device is greater than or equal to a specified sweeping duration threshold.

The beam sweeping duration of the UE does not exceed that in the conventional beam sweeping solution. For example, first duration is greater than or equal to second duration. The first duration is beam sweeping duration of the terminal device that accesses the first access network device when the first access network device executes the first policy, the second duration is beam sweeping duration of the terminal device that accesses the first access network device when the first access network device executes a second policy or does not execute the beam management enhancement policy, and the second policy is a beam management enhancement policy obtained based on non-AI.

An access success rate of the UE decreases. For example, an access success rate of accessing the first access network device by the terminal device is less than or equal to a specified success rate threshold. For example, the threshold is 80% of an access success rate in the conventional beam sweeping solution. For example, a first access success rate is less than or equal to a second access success rate. The first access success rate is an access success rate of accessing the first access network device by the terminal device when the first access network device executes the first policy, the second access success rate is an access success rate of accessing the first access network device by the terminal device when the first access network device executes the second policy or does not execute the beam management enhancement policy, and the second policy is the beam management enhancement policy obtained based on the non-AI.

A throughput of the UE decreases. For example, the UE does not select an optimal beam due to an improper target beam for sparse sweeping. As a result, the throughput decreases compared with that in the conventional beam sweeping solution. For example, a throughput of the terminal device that accesses the first access network device is less than or equal to a specified throughput threshold. For example, a first throughput is less than a second throughput. The first throughput is a throughput of the terminal device that accesses the first access network device when the first access network device executes the first policy, the second throughput is a throughput of the terminal device that accesses the first access network device when the first access network device executes the second policy or does not execute the beam management enhancement policy, and the second policy is the beam management enhancement policy obtained based on the non-AI.

If the first network element is the first access network device, the UE may send one or more of the beam sweeping duration value, the access success rate, and the throughput to the first access network device, so that the access network device performs determining.

When one or more of the following cases occur (which may also be understood as that one or more of the following conditions are satisfied), it is determined that an execution exception occurs on the positioning accuracy enhancement policy, where the following plurality of cases are usually applicable to the scenario in which the first network element is the first terminal or the first access network device:
A specific proportion (for example, more than 80%) of LOS/NLOS determining results of the UE are incorrect. For example, a quantity of incorrect results of line-of-sight transmission LOS or non-line-of-sight transmission NLOS performed by the first access network device on the terminal device is greater than a specified quantity threshold.

It should be noted that the foregoing describes, for each type of policy, conditions used for determining whether an exception occurs on the policy. These conditions are merely examples for description, and should not constitute a limitation on determining whether the exception occurs on the policy. In this application, the conditions used for determining whether the exception occurs may be mutually used between a plurality of types of policies. In addition, it may be understood that, when the first network element cannot directly measure parameters in the foregoing described conditions used for determining whether the exception occurs on the policy, the parameters may be measured by a network element that can directly measure the parameters and then sent to the first network element.

In a specific example, when determining that the first policy is normally executed, the first network element sends, to the second network element, indication information indicating that the first policy is normally executed (that is, the information about the execution status is the indication information indicating that the first policy is normally executed). The indication information indicating that the first policy is normally executed includes but is not limited to one or more of the following: an indication of normal execution, a measurement parameter used for determining that the policy is normal, a configuration parameter used for determining that the policy is normal, effective time of the configuration parameter, effective time of the configuration parameter, an identifier of the first AI model (for example, a number or an index used for identifying the first AI model), a parameter of the first AI model, an identifier of the first policy (for example, a number or an index used for identifying the first policy), the first policy, or effective time of the first policy.

For example, a value of one bit or more bits indicates the normal execution or the execution exception. For example, when the value of the bit is 0, it indicates that the normal execution; or when the value of the bit is 1, it indicates that the execution exception.

The measurement parameter used for determining that the policy is normal may be understood as a performance parameter of each network element (the first network element and/or another network element that communicates with the first network element) when the first network element executes the first policy, and includes: one or more of pieces of information in the first measurement quantity obtained in step 301, and/or one or more parameters (excluding the specified threshold) in the foregoing described case in which it is determined that the execution exception occurs (or the condition satisfied when the execution exception occurs). For example, the performance parameter related to the normal execution includes but is not limited to one or more of the following: current load of each cell, predicted load of each cell, a handover success rate, an access success rate, or the like.

The configuration parameter used for determining that the policy is normal may be understood as various thresholds/threshold values and the like that are set to determine whether the exception occurs, and includes but is not limited to one or more specified thresholds in the foregoing described conditions used for determining whether the execution exception occurs on the policy. For example, the configuration parameter used for determining that the policy is normal includes but is not limited to one or more of the following: the specified load threshold, the specified duration threshold, the specified value threshold, the specified first rate threshold, the specified second rate threshold, the specified efficiency threshold, the specified first load difference threshold, the specified second load difference threshold, the specified third load difference threshold, the specified throughput threshold, the specified sweeping duration threshold, the specified success rate threshold, or effective time of the various thresholds/threshold values.

In a specific example, when determining that the exception occurs when the first policy is executed, the first network element sends, to the second network element, indication information indicating that the exception occurs when the first policy is executed (that is, the information about the execution status is the indication information indicating that the exception occurs when the first policy is executed). The indication information indicating that the exception occurs when the first policy is executed includes but is not limited to one or more of the following: an indication of the execution exception, time at which the execution exception occurs, a cause of the execution exception, a measurement parameter used for determining that the exception occurs on the policy, a configuration parameter used for determining that the exception occurs on the policy, effective time of the configuration parameter, a correction manner that the first network element expects to use for the execution exception, information needed for the correction manner that the first network element expects to use for the execution exception, an identifier of the first AI model (for example, a number or an index used for identifying the first AI model), a parameter of the first AI model, an identifier of the first policy (for example, a number or an index used for identifying the first policy), the first policy, or effective time of the first policy.

The time at which the execution exception occurs is, for example, 19:00 or 7:00 PM.

The cause of the execution exception may be an exception of a specific type of policy, for example, an exception of the energy saving policy, an exception of the load balancing policy, an exception of the mobility optimization policy, an exception of the channel state information-reference signal CSI-RS feedback enhancement policy, an exception of the beam management enhancement policy, or an exception of the positioning accuracy enhancement policy. The cause of the execution exception may be refined to a specific cause. The specific cause may be understood as the foregoing described case in which it is determined that the execution exception occurs (or the condition satisfied when the execution exception occurs).

The measurement parameter used for determining that the exception occurs on the policy may be understood as a performance parameter of each network element (the first network element and/or another network element that communicates with the first network element) when the first network element executes the first policy, and includes: one or more of pieces of information in the first measurement quantity obtained in step 301, and/or one or more parameters (excluding the specified threshold) in the foregoing described case in which it is determined that the execution exception occurs (or the condition satisfied when the execution exception occurs). For details, refer to the foregoing described configuration parameters used for determining that the policy is normal. Details are not described again.

The configuration parameter used for determining that the exception occurs on the policy may be understood as various thresholds/threshold values and the like that are set to determine whether the exception occurs, and includes but is not limited to one or more specified thresholds in the foregoing described conditions used for determining whether the execution exception occurs on the policy. For details, refer to the foregoing described configuration parameters used for determining that the policy is normal. Details are not described again.

The correction manner that the first network element expects to use for the execution exception includes but is not limited to any one of the following:
Manner 1: Execute the second policy, where the second policy is the policy obtained based on the non-AI, and the second policy and the first policy are of a same type. This may be understood as that the correction manner expected to be used is executing a conventional policy (where the second policy is the conventional policy), instead of the policy obtained based on the AI.
Manner 2: Execute a third policy, where the third policy is a policy determined based on a second AI model, and the third policy and the first policy are of a same type. This may be understood as that the correction manner expected to be used is determining a new AI policy by using a new AI model (where the third policy is the new AI policy). The third policy may be obtained in the following manner: A to-be-input second measurement quantity is input into the new second AI model based on the new second AI model, to obtain the third policy output by the second AI model. In this manner, the first network element may further report information about the second AI model, for example, a number or an index of the second AI model, or a parameter of the second AI model, to the second network element. The second AI model may be obtained by correcting the first AI model, or may be a newly trained AI model.
Manner 3: Execute a fourth policy, where the fourth policy is a policy executed before the first policy, and the fourth policy and the first policy are of a same type. This may be understood as that the correction manner expected to be used is falling back to a previously executed policy (where the fourth policy is the previously executed policy).
Manner 4: Skip executing any policy of a same type as the first policy. This may be understood as that the correction manner expected to be used is exiting the first policy.

The information needed for the correction manner that the first network element expects to use for the execution exception may be information used for correcting the first AI model, or information used for correcting the first policy. It may be understood that a corrected first AI model is the second AI model, and may be used for determining the third policy, and a corrected first policy is the third policy (the new AI policy). The information needed for the correction manner that the first network element expects to use for the execution exception includes but is not limited to one or more of the following: an identifier (for example, an index or a number) of the new AI model, a parameter of the new AI model, an identifier of the new AI policy (namely, the third policy) (for example, a number or an index of the policy), the new AI policy, performance information of another network element, a historical trajectory of the UE, load information of a neighboring cell, a network configuration (for example, a network energy saving configuration), or the like.

Optionally, step 305: The second network element sends first information to the first network element.

Correspondingly, the first network element receives the first information from the second network element.

Step 305 is an optional step, and may not be performed, or may be performed together with subsequent step 309.

The first information may indicate one or more of the following: allowing the first network element to correct the execution exception, not allowing the first network element to correct the execution exception, a correction manner that is allowed to be used for the execution exception, or information that needs to be sent by the first network element again (for example, information about the first measurement quantity or model-related information, where in this case, the first network element may send corresponding information to the second network element again).

A value of one bit or more bits may indicate whether the correction is allowed or not allowed to be performed. For example, when the value of the bit is 0, it indicates that the correction is allowed to be performed; or when the value of the bit is 1, it indicates that the correction is not allowed to be performed.

If the first network element reports the correction manner that the first network element expects to use, the correction manner that the second network element allows to use for the execution exception may be the correction manner that the first network element expects to use, or certainly may not be the correction manner that the first network element expects to use. The second network element may determine, based on the correction manner that the first network element expects to use, a performance parameter of another network element, and/or the like, the correction manner that is allowed to be used.

The correction manner that is allowed to be used includes but is not limited to any one of the following manners:
Manner 1: Execute the second policy, where the second policy is the policy obtained based on the non-AI, and the second policy and the first policy are of a same type. This may be understood as that the correction manner that is allowed to be used is executing a conventional policy (where the second policy is the conventional policy), instead of the policy obtained based on the AI.

That the first network element corrects, based on the correction manner, the exception generated on the first policy includes: The first network element skips the first policy, and executes the second policy.

Manner 2: Execute a third policy, where the third policy is a policy determined based on a second AI model, and the third policy and the first policy are of a same type. This may be understood as that the correction manner that is allowed to be used is determining a new AI policy (where the third policy is the new AI policy) by using a new AI model (where the second model is the new AI model). The third policy may be obtained in the following manner: A to-be-input second measurement quantity is input into the second AI model, to obtain the third policy output by the second AI model. The second AI model may be an AI model obtained by correcting (training) the first AI model, or may be a retrained AI model.

That the first network element corrects, based on the correction manner, the exception generated on the first policy includes: The first network element skips the first policy, and executes the third policy.

Manner 3: Execute a fourth policy, where the fourth policy is a policy executed before the first policy, and the fourth policy and the first policy are of a same type. This may be understood as that the correction manner that is allowed to be used is falling back to a previously executed policy (where the fourth policy is the previously executed policy).

That the first network element corrects, based on the correction manner, the exception generated on the first policy includes: The first network element skips the first policy, and executes the fourth policy.

Manner 4: Skip executing any policy of a same type as the first policy. This may be understood as that the correction manner that is allowed to be used is exiting the first policy.

That the first network element corrects, based on the correction manner, the exception generated on the first policy includes: The first network element skips the first policy.

A value of two bits or more bits may indicate the correction manner that is allowed to be used.

When the correction manner that is allowed to be used is executing the third policy (the new AI policy), the first information includes but is not limited to at least one of the following: an index of the third policy, the third policy, an index of the second AI model, a parameter of the second AI model, or performance information of the third network element, where the performance information of the third network element is used for determining the third policy.

In a possible implementation, that the first network element corrects, based on the correction manner, the exception generated on the first policy includes: When the first information includes the identifier of the third policy, the first network element executes the third policy indicated by the identifier of the third policy, to correct the exception generated on the first policy.

In a possible implementation, that the first network element corrects, based on the correction manner, the exception generated on the first policy includes: When the first information includes the third policy, the first network element executes the third policy, to correct the exception generated on the first policy.

In a possible implementation, that the first network element corrects, based on the correction manner, the exception generated on the first policy includes: When the first information includes the identifier of the second AI model, the first network element inputs a second measurement quantity into the second AI model, to obtain the third policy, and executes the third policy, to correct the exception generated on the first policy. The second measurement quantity may be the same as or different from the first measurement quantity. That the second measurement quantity is different from the first measurement quantity may mean that measurement information included in the measurement quantities is different. For example, the first measurement quantity includes measurement information of the first access network device and the measurement information of the UE, and the second measurement quantity includes the measurement information of the UE, but does not include the measurement information of the first access network device. That the second measurement quantity is different from the first measurement quantity may mean that values of measurement quantities are different. For example, for load information, load information corresponding to the first measurement quantity is 80%, and load information corresponding to the second measurement quantity is 85%. Generally, measurement time of the second measurement quantity is not earlier than measurement time of the first measurement quantity.

In a possible implementation, that the first network element corrects, based on the correction manner, the exception generated on the first policy includes: When the first information includes the parameter of the second AI model, the first network element inputs a second measurement quantity into the second AI model corresponding to the parameter, to obtain the third policy, and executes the third policy, to correct the exception generated on the first policy.

In a possible implementation, that the first network element corrects, based on the correction manner, the exception generated on the first policy includes: When the first information includes the performance information of the third network element, the first network element corrects the first AI model based on the performance information, to obtain the second AI model, inputs a third measurement quantity into the second AI model, to obtain the third policy, and executes the third policy, to correct the exception generated on the first policy, where the third measurement quantity is the same as or may be different from the first measurement quantity. That the third measurement quantity is different from the first measurement quantity may mean that measurement information included in the measurement quantities is different and/or values of the measurement quantities are different. For details, refer to the descriptions that the first measurement quantity is different from the second measurement quantity. A principle is similar, and details are not described again. Generally, measurement time of the third measurement quantity is not earlier than the measurement time of the first measurement quantity.

In a possible implementation, correcting the first AI model based on the performance information includes: using the performance information as training data, and retraining the first AI model to obtain the second AI model.

When determining that the exception occurs when the first policy is executed, the first network element may wait for the second network element to notify the correction manner that is allowed to be used. After receiving, from the second network element, the correction manner that is allowed to be used, the first network element performs correction based on the correction manner that is allowed to be used. Alternatively, when determining that the exception occurs when the first policy is executed, the first network element does not need to wait for the second network element to notify the correction manner that is allowed to be used, but determines a to-be-used correction manner, and performs correction based on the to-be-used correction manner determined by the first network element. Alternatively, when determining that the exception occurs when the first policy is executed, the first network element may first determine a to-be-used correction manner, and perform correction based on the correction manner determined by the first network element. After receiving, from the second network element, the correction manner that is allowed to be used, the first network element performs correction based on the correction manner that is allowed to be used.

A sequence of step 305 and step 306 is not limited.

Step 306: When the second network element determines, based on the information about the execution status, that the exception occurs when the first network element executes the first policy, the second network element sends second information to the third network element.

Correspondingly, the third network element receives the second information from the second network element.

If it is specified that the information about the execution status is sent only when the exception occurs when the policy is executed, the information about the execution status is the indication information indicating that the exception occurs when the first policy is executed. In this case, after receiving the indication information indicating that the exception occurs when the first policy is executed, the second network element may send the second information to the third network element, and a process of determining, based on the information about the execution status, whether the exception occurs when the first network element executes the first policy may be omitted.

The second information indicates one or more of the following:
occurrence of the exception when the first policy is executed, occurrence of an exception when a first-type policy output by the first AI model is executed (where a type of the first policy is a first type), identification information (for example, a cell ID) of the first network element, one or more pieces of information sent by the first network element to the second network element, one or more pieces of information sent by the second network element to the first network element, self-check performed by the third network element on a currently executed policy, a policy guidance solution for the third network element, or information that needs to be sent by the third network element.

The policy guidance solution for the third network element is similar to the correction manner that is allowed to be used and that is sent by the second network element to the first network element, for example, includes any one of the following: executing the policy obtained based on the non-AI (which may be understood as the conventional policy), executing the new AI policy, executing the previous policy, or exiting the current policy.

The information that needs to be sent by the third network element may be understood as information requested by the second network element, and includes but is not limited to: the performance information of the third network element, and information requested by the first network element from the second network element. The information requested by the first network element from the second network element includes but is not limited to the information needed for the correction manner that the first network element expects to use for the execution exception.

In an example, the third network element is any network element managed or served by the second network element. In an example, the third network element is executing the policy output by the first AI model (in other words, the first network element and the second network element are network elements that use a same model). In an example, the third network element is executing the first policy. In an example, the third network element is executing a fifth policy. The fifth policy and the first policy are of a same type. The fifth policy may be a policy obtained based on the AI, or may be a policy (namely, a conventional policy) obtained based on the non-AI. In an example, the third network element is a network element that has a potential AI policy execution exception when the second network element is associated with the first network element.

A sequence of step 307 and step 308 is not limited.

Optionally, step 307: After receiving the second information from the second network element, the third network element determines whether an exception occurs on a policy executed by the third network element.

The second information may be understood as warning information. The third network element performs self-check based on the warning information of the second network element, to eliminate a risk.

Optionally, step 308: After the third network element receives the second information from the second network element, the third network element sends, to the second network element, the information requested by the second network element (that is, the information that needs to be sent by the third network element).

Correspondingly, the second network element receives, from the third network element, the information requested by the second network element (that is, the information that needs to be sent by the third network element).

Optionally, step 309: The second network element sends, to the first network element, information needed by the first network element.

Correspondingly, the first network element receives, from the second network element, the information needed by the first network element.

The second network element may send, to the first network element based on the indication information indicating that the exception occurs when the first policy is executed in step 304 and/or the information that is requested by the second network element and that is sent by the third network element to the second network element (that is, the information that needs to be sent by the third network element) in step 308, the information needed by the first network element. For the information needed by the first network element, refer to the content of the first information in step 305.

In a specific example, the second network element may determine (or re-determine), based on the information that is requested by the second network element and that is sent by the third network element (that is, the information that needs to be sent by the third network element), that the first network element is allowed to correct the execution exception, that the first network element is not allowed to correct the execution exception, or the correction manner that is allowed to be used for the execution exception. In addition, the second network element indicates, to the first network element, that the first network element is allowed to correct the execution exception, that the first network element is not allowed to correct the execution exception, or the correction manner that is allowed to be used for the execution exception. For details, refer to the foregoing descriptions of the first information in step 305. Details are not described again.

Embodiment 2: A difference from Embodiment 1 includes: A first network element directly communicates with a third network element without participation of a second network element.

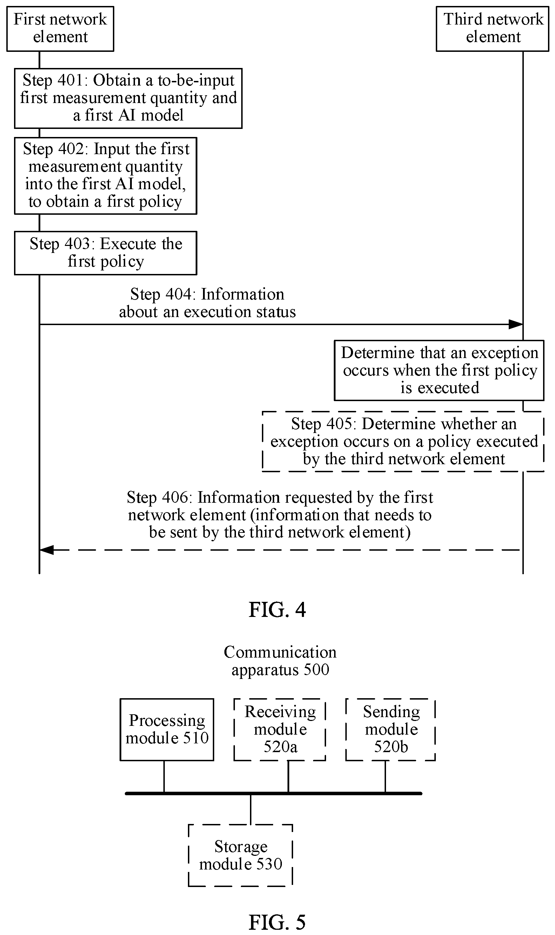

FIG. 4 is a diagram of a communication procedure. The communication procedure is applicable to but is not limited to any one of the following communication scenarios:
The first network element is a first terminal, and the third network element is a second terminal.

The first network element is a first access network device, and the third network element is a second access network device.

The access network devices communicate with each other through an Xn interface. The terminals communicate with each other through a sidelink interface, for example, a PC5 interface.

The first terminal or the second terminal may be the terminal device described in FIG. 1a or FIG. 1b. The first access network device or the second access network device may be the access network device described in FIG. 1a, or the gNB-CU, the gNB-CU-CP, the gNB-CU-CP 1, the gNB-CU-CP 2, or the gNB-DU described in FIG. 1b.

The communication procedure includes the following steps.

Step 401: Obtain a to-be-input first measurement quantity and obtain a first AI model.

The AI model is a model obtained based on artificial intelligence AI.

Step 402: Input the to-be-input first measurement quantity into the first AI model, to obtain a first policy output by the first AI model.

Step 403: Execute the first policy.

Step 404: The first network element sends, to the third network element, information about an execution status of executing the first policy.

Correspondingly, the third network element receives, from the first network element, the information about the execution status of executing the first policy by the first network element.

The information about the execution status indicates that an exception occurs or no exception occurs when the first network element executes the first policy.

For a process of step 401 to step 404, refer to the process of step 301 to step 304. Details are not described again.

It should be noted that a difference between step 404 and step 304 includes: The information about the execution status sent by the first network element to the third network element may include one or more pieces of information in the information about the execution status sent by the first network element to the second network element in step 304, and/or one or more pieces of information in the second information sent by the second network element to the third network element in step 306.

In a specific example, the information about the execution status sent by the first network element to the third network element includes but is not limited to one or more of the following:
an indication of the execution exception, time at which the execution exception occurs, a cause of the execution exception, a measurement parameter used for determining that the exception occurs on the policy, a configuration parameter used for determining that the exception occurs on the policy, effective time of the configuration parameter, a correction manner that the first network element expects to use for the execution exception, information needed for the correction manner that the first network element expects to use for the execution exception, an identifier of the first AI model, a parameter of the first AI model, an identifier of the first policy, the first policy, effective time of the first policy, identification information of the first network element, self-check performed by the third network element on a currently executed policy, or a policy guidance solution for the third network element.

Optionally, step 405: After receiving the information about the execution status from the first network element, the third network element determines whether an exception occurs on the policy executed by the third network element.

Further, optionally, when determining that the information about the execution status is indication information indicating that the exception occurs when the first policy is executed, the third network element determines whether the exception occurs on the policy executed by the third network element.

Optionally, step 406: After the third network element receives the information about the execution status from the first network element, the third network element sends, to the first network element, information requested by the first network element in the information about the execution status (that is, information that needs to be sent by the third network element).

Further, optionally, when determining that the information about the execution status is the indication information indicating that the exception occurs when the first policy is executed, the third network element sends, to the first network element, the information requested by the first network element in the information about the execution status (that is, the information that needs to be sent by the third network element).

For example, the information that needs to be sent by the third network element includes but is not limited to one or more of the following:
allowing the first network element to correct the execution exception, not allowing the first network element to correct the execution exception, a correction manner that is allowed to be used for the execution exception, information that needs to be sent by the first network element again (for example, information about the measurement quantity or model-related information, where in this case, the first network element may send corresponding information to the third network element again), or the information needed for the correction manner that the first network element expects to use for the execution exception. The information needed for the correction manner that the first network element expects to use for the execution exception includes but is not limited to one or more of the following: an identifier (for example, an index or a number) of a new AI model, a parameter of the new AI model, an identifier of a new AI policy (namely, a third policy) (for example, a number or an index of the policy), the new AI policy, performance information of another network element, a historical trajectory of a UE, load information of a neighboring cell, a network configuration (for example, a network energy saving configuration), or the like.

Optionally, the first network element may further correct the first policy or the first AI model based on the information that is requested by the first network element and that is sent by the third network element.

After the first network element corrects the first policy, a second policy is obtained, and the first network element may skip the first policy, and execute the second policy.

The first network element corrects the first AI model to obtain a second AI model, and inputs a measurement quantity into the second AI model to obtain the third policy. The first network element may skip the first policy, and execute the third policy. A manner of correcting the first AI model based on the performance information is: using the performance information as training data, and retraining first AI to obtain the second AI model.

Optionally, the third network element or the first network element may further send, to another network element (for example, a core network device or an OAM), information exchanged between the first network element and the third network element.

### Embodiment 3:

When communicating with the second network element, the first network element may also communicate with the third network element. In other words, the first network element may simultaneously perform the procedure in FIG. 3 and the procedure in FIG. 4. In a possible implementation, when the first network element simultaneously performs step 304 and step 404, step 304 is only used for notification, and the second network element does not need to provide a feedback to the first network element. For example, step 305 or step 309 does not need to be performed. In another possible implementation, when the first network element simultaneously performs step 304 and step 404, step 404 is only used for notification, and the third network element does not need to provide a feedback to the first network element. For example, step 406 does not need to be performed. In another possible implementation, when the first network element simultaneously performs step 304 and step 404, the first network element may decide based on the feedback of the second network element and the feedback of the third network element.

The foregoing describes the method in embodiments of this application, and the following describes an apparatus in embodiments of this application. The method and the apparatus are based on a same technical idea. The method and the apparatus have similar principles for resolving problems. Therefore, for implementations of the apparatus and the method, refer to each other. Details are not repeated herein.

In embodiments of this application, the apparatus may be divided into functional modules based on the foregoing method examples. For example, the apparatus may be divided into functional modules corresponding to functions, or two or more functions may be integrated into one module. These modules may be implemented in a form of hardware, or may be implemented in a form of a software functional module. It should be noted that, in this embodiment of this application, module division is an example, and is merely a logical function division. In a specific implementation, another division manner may be used.

Based on a same technical concept as the foregoing methods, FIG. 5 is a diagram of a structure of a communication apparatus 500. The communication apparatus 500 may include a processing module 510, and optionally, further include a receiving module 520a, a sending module 520b, and a storage module 530. The processing module 510 may be separately connected to the storage module 530, the receiving module 520a, and the sending module 520b, and the storage module 530 may also be connected to the receiving module 520a and the sending module 520b.

In an example, the receiving module 520a and the sending module 520b may alternatively be integrated together, and are defined as a transceiver module.

In an example, the communication apparatus 500 may be a first network element, or may be a chip or a functional unit used in the first network element. The communication apparatus 500 has any function of the first network element in the foregoing method. For example, the communication apparatus 500 can perform the steps performed by the first network element in the methods in FIG. 3 and FIG. 4.

The receiving module 520a may perform a receiving action performed by the first network element in the foregoing method embodiments.

The sending module 520b may perform a sending action performed by the first network element in the foregoing method embodiments.

The processing module 510 may perform an action, other than the sending action and the receiving action, in the actions performed by the first network element in the foregoing method embodiments.

In an example, the processing module 510 is configured to: obtain a to-be-input first measurement quantity, and obtain a first artificial intelligence AI model; input the first measurement quantity into the first AI model, to obtain a first policy output by the first AI model; and execute the first policy. When determining that an exception occurs when the first policy is executed, the sending module 520b is configured to send, to a second network element, indication information indicating that the exception occurs when the first policy is executed.

In an example, a type of the first policy includes any one of the following: an energy saving policy, a load balancing policy, a mobility optimization policy, a channel state information-reference signal CSI-RS feedback enhancement policy, a beam management enhancement policy, or a positioning accuracy enhancement policy.

In an example, the indication information indicating that the exception occurs when the first policy is executed includes one or more of the following: an indication of the execution exception, time at which the execution exception occurs, a cause of the execution exception, a measurement parameter used for determining that the exception occurs on the policy, a configuration parameter used for determining that the exception occurs on the policy, effective time of the configuration parameter, a correction manner that the first network element expects to use for the execution exception, information needed for the correction manner that the first network element expects to use for the execution exception, an identifier of the first AI model, a parameter of the first AI model, an identifier of the first policy, the first policy, or effective time of the first policy.

In an example, the receiving module 520a is configured to receive first information from the second network element, where the first information indicates a correction manner that is allowed to be used for the execution exception. The processing module 510 is configured to correct, based on the correction manner, the exception generated on the first policy.

In an example, the correction manner that is allowed to be used includes any one of the following: executing a second policy, where the second policy is a policy obtained based on non-AI, and the second policy and the first policy are of a same type; executing a third policy, where the third policy is a policy determined based on a second AI model, and the third policy and the first policy are of a same type; or executing a fourth policy, where the fourth policy is a policy executed before the first policy, and the fourth policy and the first policy are of a same type.

In an example, when the correction manner that is allowed to be used is executing the third policy, the first information includes at least one of the following: an identifier of the third policy, the third policy, an identifier of the second AI model, a parameter of the second AI model, or performance information of the third network element, where the performance information of the third network element is used for determining the third policy.

In an example, the processing module 510 is specifically configured to: when the first information includes the identifier of the third policy, execute the third policy indicated by the identifier of the third policy, to correct the exception generated on the first policy; when the first information includes the third policy, execute the third policy, to correct the exception generated on the first policy; when the first information includes the identifier of the second AI model, input a second measurement quantity into the second AI model, to obtain the third policy, and execute the third policy, to correct the exception generated on the first policy, where the second measurement quantity is the same as the first measurement quantity, or measurement time of the second measurement quantity is not earlier than measurement time of the first measurement quantity; when the first information includes the parameter of the second AI model, input a second measurement quantity into the second AI model corresponding to the parameter, to obtain the third policy, and execute the third policy, to correct the exception generated on the first policy, where the second measurement quantity is the same as the first measurement quantity, or measurement time of the second measurement quantity is not earlier than measurement time of the first measurement quantity; or when the first information includes the performance information of the third network element, correct the first AI model based on the performance information, to obtain the second AI model, input a third measurement quantity into the second AI model, to obtain the third policy, and execute the third policy, to correct the exception generated on the first policy, where the third measurement quantity is the same as the first measurement quantity, or measurement time of the third measurement quantity is not earlier than measurement time of the first measurement quantity.

In an example, the apparatus is a first access network device, and the second network element is a core network element or an operation, administration, and maintenance OAM network element; the apparatus is a first terminal device, and the second network element is an access network device; the apparatus is a first access network device, and the second network element is a second access network device; or the apparatus is a first terminal device, and the second network element is a second terminal device.

In an example, when determining that the exception occurs when the first policy is executed, the sending module 520b is configured to send, to the third network element, the indication information indicating that the exception occurs when the first policy is executed. The receiving module 520a is configured to receive the performance information from the third network element. The processing module 510 is configured to correct the first policy or the first AI model based on the performance information of the third network element.

In an example, the storage module 530 may store computer-executable instructions for the method performed by the first network element, to enable the processing module 510, the receiving module 520a, and the sending module 520b to perform the method performed by the first network element in the foregoing examples.

In an example, the communication apparatus 500 may be a second network element, or may be a chip or a functional unit used in the second network element. The communication apparatus 500 has any function of the second network element in the foregoing method. For example, the communication apparatus 500 can perform the steps performed by the second network element in the method in FIG. 3.

The receiving module 520a may perform a receiving action performed by the second network element in the foregoing method embodiments.

The sending module 520b may perform a sending action performed by the second network element in the foregoing method embodiments.

The processing module 510 may perform an action, other than the sending action and the receiving action, in the actions performed by the second network element in the foregoing method embodiments.

In an example, the receiving module 520a is configured to receive, from a first network element, indication information indicating that an exception occurs when the first network element executes a first policy, where the first policy is a policy output by a first AI model after the first network element inputs a to-be-input first measurement quantity into the first AI model. The sending module 520b is configured to send second information to a third network element, where the second information indicates that the exception occurs when the first policy is executed or an exception occurs when a first-type policy output by the first AI model is executed, and a type of the first policy is a first type.

In an example, the third network element satisfies any one of the following conditions: The third network element is executing the policy output by the first AI model; the third network element is executing the first policy; or the third network element is executing a fifth policy, where the fifth policy and the first policy are of a same type.

In an example, the processing module 510 is configured to determine a correction manner that is allowed to be used for the execution exception. The sending module 520b is further configured to send first information to the first network element, where the first information indicates the correction manner that is allowed to be used for the execution exception.

In an example, the correction manner that is allowed to be used includes: executing a second policy, where the second policy is a policy obtained based on non-AI, and the second policy and the first policy are of a same type; executing a third policy, where the third policy is a policy determined based on a second AI model, and the third policy and the first policy are of a same type; executing a fourth policy, where the fourth policy is a policy executed before the first policy, and the fourth policy and the first policy are of a same type; or skipping executing a policy.

In an example, when the correction manner that is allowed to be used is executing the third policy, the first information includes at least one of the following: an identifier of the third policy, the third policy, an identifier of the second AI model, a parameter of the second AI model, or performance information of the third network element, where the performance information of the third network element is used for determining the third policy.

In an example, the receiving module 520a is configured to receive performance information from the third network element. The processing module 510 is configured to: determine the performance information of the third network element as information used for correcting the first AI model, determine the performance information of the third network element as information used for correcting the first policy, determine information about the second AI model based on the performance information of the third network element and the AI, or determine information about the third policy based on the performance information of the third network element and the AI.

In an example, the receiving module 520a is further configured to receive the performance information of the third network element.

In an example, the storage module 530 may store computer-executable instructions for the method performed by the second network element, to enable the processing module 510, the receiving module 520a, and the sending module 520b to perform the method performed by the second network element in the foregoing examples.

In an example, the communication apparatus 500 may be a third network element, or may be a chip or a functional unit used in the third network element. The communication apparatus 500 has any function of the third network element in the foregoing method. For example, the communication apparatus 500 can perform the steps performed by the third network element in the methods in FIG. 3 and FIG. 4.

The receiving module 520a may perform a receiving action performed by the third network element in the foregoing method embodiments.

The sending module 520b may perform a sending action performed by the third network element in the foregoing method embodiments.

The processing module 510 may perform an action, other than the sending action and the receiving action, in the actions performed by the third network element in the foregoing method embodiments.

In an example, the receiving module 520a is configured to receive second information from a second network element, where the second information indicates that an exception occurs when a first policy is executed or an exception occurs when a first-type policy output by a first AI model is executed, and the first policy belongs to a first type. The sending module 520b is configured to send performance information of the third network element to the second network element. The processing module 510 is configured to determine whether an exception occurs on a policy executed by the third network element.

In an example, the receiving module 520a is configured to receive, from a first network element, indication information indicating that the exception occurs when the first network element executes the first policy, where the first policy is a policy output by the first AI model after the first network element inputs a to-be-input first measurement quantity into the first AI model. The sending module 520b is configured to send the performance information of the third network element to the first network element. The processing module 510 is configured to determine whether the exception occurs on the policy executed by the third network element.

In an example, the storage module 530 may store computer-executable instructions for the method performed by the third network element, to enable the processing module 510, the receiving module 520a, and the sending module 520b to perform the method performed by the third network element in the foregoing examples.

For example, the storage module may include one or more memories. The memory may be one or more devices or components in a circuit that are configured to store a program or data. The storage module may be a register, a cache, a RAM, or the like. The storage module may be integrated with the processing module. The storage module may be a ROM or another type of static storage device that can store static information and instructions. The storage module may be independent of the processing module.

The transceiver module may be an input/output interface, a pin, a circuit, or the like

As a possible product form, the apparatus may be implemented by using a general bus architecture.

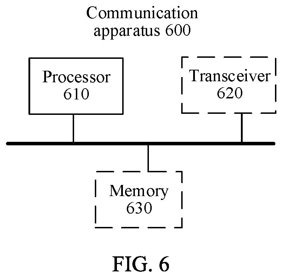

FIG. 6 is a block diagram of a communication apparatus 600.

The communication apparatus 600 may include a processor 610, and optionally, further includes a transceiver 620 and a memory 630. The transceiver 620 may be configured to receive a program or instructions and transmit the program or instructions to the processor 610. Alternatively, the transceiver 620 may be configured to perform communication interaction between the communication apparatus 600 and another communication device, for example, exchange control signaling and/or service data. The transceiver 620 may be a code and/or data read/write transceiver, or the transceiver 620 may be a signal transmission transceiver between a processor and a transceiver machine. The processor 610 and the memory 630 are electrically coupled.

In an example, the communication apparatus 600 may be a first network element, or may be a chip used in the first network element. It should be understood that the apparatus has any function of the first network element in the foregoing method. For example, the communication apparatus 600 can perform the steps performed by the first network element in the methods in FIG. 3 and FIG. 4. For example, the memory 630 is configured to store a computer program. The processor 610 may be configured to invoke the computer program or instructions stored in the memory 630, to perform the method performed by the first network element in the foregoing example, or perform, by using the transceiver 620, the method performed by the first network element in the foregoing example.

In an example, the communication apparatus 600 may be a second network element, or may be a chip used in the second network element. It should be understood that the apparatus has any function of the second network element in the foregoing method. For example, the communication apparatus 600 can perform the steps performed by the second network element in the method in FIG. 3. For example, the memory 630 is configured to store a computer program. The processor 610 may be configured to invoke the computer program or instructions stored in the memory 630, to perform the method performed by the second network element in the foregoing example, or perform, by using the transceiver 620, the method performed by the second network element in the foregoing example.

In an example, the communication apparatus 600 may be a third network element, or may be a chip used in the third network element. It should be understood that the apparatus has any function of the third network element in the foregoing method. For example, the communication apparatus 600 can perform the steps performed by the third network element in the methods in FIG. 3 and FIG. 4. For example, the memory 630 is configured to store a computer program. The processor 610 may be configured to invoke the computer program or instructions stored in the memory 630, to perform the method performed by the third network element in the foregoing example, or perform, by using the transceiver 620, the method performed by the third network element in the foregoing example.

The processing module 510 in FIG. 5 may be implemented by using the processor 610.

The receiving module 520a and the sending module 520b in FIG. 5 may be implemented by using the transceiver 620. Alternatively, the transceiver 620 includes a receiver and a transmitter. The receiver performs a function of the receiving module, and the transmitter performs a function of the sending module.

The storage module 530 in FIG. 5 may be implemented by using the memory 630.

As a possible product form, the apparatus may be implemented by using a general-purpose processor (where the general-purpose processor may also be referred to as a chip or a chip system).

In a possible implementation, the general-purpose processor implementing the apparatus used in the first network element or the apparatus used in the second network element or the third network element includes a processing circuit (where the processing circuit may also be referred to as a processor). Optionally, the general-purpose processor further includes a storage medium (where the storage medium may also be referred to as a memory) and an input/output interface for internal connection to and communication with the processing circuit, where the storage medium is configured to store instructions executed by the processing circuit, to perform the method performed by the first network element, the second network element, or the third network element in the foregoing examples.

The processing module 510 in FIG. 5 may be implemented by using the processing circuit.

The receiving module 520a and the sending module 520b in FIG. 5 may be implemented by using the input/output interface. Alternatively, the input/output interface includes an input interface and an output interface. The input interface performs a function of the receiving module, and the output interface performs a function of the sending module.

The storage module 530 in FIG. 5 may be implemented by using the storage medium.

As a possible product form, the apparatus in embodiments of this application may be further implemented by using the following: one or more FPGAs (field-programmable gate arrays), a PLD (programmable logic device), a controller, a state machine, gate logic, a discrete hardware component, any other proper circuit, or any combination of circuits that can perform various functions described in this application.

An embodiment of this application further provides a computer-readable storage medium that stores a computer program. When the computer program is executed by a computer, the computer is enabled to perform the foregoing communication method. In other words, the computer program includes instructions for implementing the foregoing communication method.

An embodiment of this application further provides a computer program product. The computer program product includes computer program code. When the computer program code is run on a computer, the computer is enabled to perform the foregoing communication method.

An embodiment of this application further provides a communication system. The communication system includes one or more of the first network element, the second network element, and the third network element that perform the foregoing communication method.

In addition, the processor mentioned in embodiments of this application may be a central processing unit (central processing unit, CPU) or a baseband processor. The baseband processor and the CPU may be integrated or separated, or may be a network processor (network processor, NP) or a combination of a CPU and an NP. The processor may further include a hardware chip or another general-purpose processor. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL) and another programmable logic device, a discrete gate or a transistor logic device, a discrete hardware component, or the like, or any combination thereof. The general-purpose processor may be a microprocessor, or the processor may be any conventional processor or the like.

The memory mentioned in embodiments of this application may be a volatile memory or a non-volatile memory, or may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory described in this application aims to include but is not limited to these memories and any memory of another proper type.

The transceiver mentioned in embodiments of this application may include a separate transmitter and/or a separate receiver, or the transmitter and the receiver may be integrated. The transceiver may operate according to an instruction of a corresponding processor. Optionally, the transmitter may correspond to a transmitter machine in a physical device, and the receiver may correspond to a receiver machine in the physical device.

A person of ordinary skill in the art may be aware that method steps and units described with reference to embodiments disclosed in this specification can be implemented by electronic hardware, computer software, or a combination thereof. To clearly describe the interchangeability between the hardware and the software, the foregoing has generally described steps and compositions of each embodiment according to functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in this application essentially, or the part contributing to the conventional technology, or all or some of the technical solutions may be represented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes: any medium that can store program code, such as a USB flash drive, a removable hard disk drive, a read-only memory (read-only memory, ROM), a random access memory (random access memory, RAM), a magnetic disk, or an optical disc.

"And/Or" in this application describes an association relationship for describing associated objects and represents that three relationships may exist. For example, A and/or B may represent the following three cases: Only A exists, both A and B exist, and only B exists. The character "/" generally indicates an "or" relationship between the associated objects. "A plurality of" in this application means two or more. In addition, it should be understood that in descriptions of this application, terms such as "first" and "second" are merely used for distinguishing and description, but should not be understood as indicating or implying relative importance, or should not be understood as indicating or implying a sequence.

Although preferred embodiments of this application have been described, other changes and modifications may be made to embodiments once a person skilled in the art learns the basic inventive concept. Therefore, the following claims are intended to be construed as to cover the preferred embodiments and all changes and modifications falling within the scope of this application.

Clearly, a person skilled in the art can make various modifications and variations to embodiments of this application without departing from the scope of embodiments of this application. In this way, this application is intended to cover these modifications and variations to embodiments of this application provided that they fall within the scope of protection defined by the following claims and their equivalent technologies of this application.

## Claims

1. A communication method, applied to a first network element and comprising:
obtaining a to-be-input first measurement quantity, and obtaining a first artificial intelligence AI model;
inputting the first measurement quantity into the first AI model, to obtain a first policy output by the first AI model;
executing the first policy; and
when determining that an exception occurs when the first policy is executed, sending indication information to a second network element, wherein the indication information indicates that the exception occurs when the first policy is executed.

2. The method according to claim 1, wherein a type of the first policy comprises any one of the following:
an energy saving policy, a load balancing policy, a mobility optimization policy, a channel state information-reference signal CSI-RS feedback enhancement policy, a beam management enhancement policy, or a positioning accuracy enhancement policy.

3. The method according to claim 1 or 2, wherein the indication information indicating that the exception occurs when the first policy is executed comprises one or more of the following:
an indication of the execution exception, time at which the execution exception occurs, a cause of the execution exception, a measurement parameter used for determining that the exception occurs on the policy, a configuration parameter used for determining that the exception occurs on the policy, effective time of the configuration parameter, a correction manner that the first network element expects to use for the execution exception, information needed for the correction manner that the first network element expects to use for the execution exception, an identifier of the first AI model, a parameter of the first AI model, an identifier of the first policy, the first policy, or effective time of the first policy.

4. The method according to any one of claims 1 to 3, further comprising:
receiving first information from the second network element, wherein the first information indicates a correction manner that is allowed to be used for the execution exception; and
correcting, based on the correction manner, the exception generated on the first policy.

5. The method according to claim 4, wherein the correction manner that is allowed to be used comprises any one of the following:
executing a second policy, wherein the second policy is a policy obtained based on non-AI, and the second policy and the first policy are of a same type;
executing a third policy, wherein the third policy is a policy determined based on a second AI model, and the third policy and the first policy are of a same type; or
executing a fourth policy, wherein the fourth policy is a policy executed before the first policy, and the fourth policy and the first policy are of a same type.

6. The method according to claim 5, wherein when the correction manner that is allowed to be used is executing the third policy, the first information comprises at least one of the following:
an identifier of the third policy, the third policy, an identifier of the second AI model, a parameter of the second AI model, or performance information of a third network element, wherein the performance information of the third network element is used for determining the third policy.

7. The method according to claim 6, wherein the correcting, based on the correction manner, the exception generated on the first policy comprises:
when the first information comprises the identifier of the third policy, executing the third policy indicated by the identifier of the third policy, to correct the exception generated on the first policy;
when the first information comprises the third policy, executing the third policy, to correct the exception generated on the first policy;
when the first information comprises the identifier of the second AI model, inputting a second measurement quantity into the second AI model, to obtain the third policy, and executing the third policy, to correct the exception generated on the first policy, wherein the second measurement quantity is the same as the first measurement quantity, or measurement time of the second measurement quantity is not earlier than measurement time of the first measurement quantity;
when the first information comprises the parameter of the second AI model, inputting a second measurement quantity into the second AI model corresponding to the parameter, to obtain the third policy, and executing the third policy, to correct the exception generated on the first policy, wherein the second measurement quantity is the same as the first measurement quantity, or measurement time of the second measurement quantity is not earlier than measurement time of the first measurement quantity; or
when the first information comprises the performance information of the third network element, correcting the first AI model based on the performance information, to obtain the second AI model, inputting a third measurement quantity into the second AI model, to obtain the third policy, and executing the third policy, to correct the exception generated on the first policy, wherein the third measurement quantity is the same as the first measurement quantity, or measurement time of the third measurement quantity is not earlier than measurement time of the first measurement quantity.

8. The method according to any one of claims 1 to 7, wherein the first network element is a first access network device, and the second network element is a core network element or an operation, administration, and maintenance OAM network element;
the first network element is a first terminal device, and the second network element is an access network device;
the first network element is a first access network device, and the second network element is a second access network device; or
the first network element is a first terminal device, and the second network element is a second terminal device.

9. A communication method, applied toa second network element and comprising:
receiving indication information from a first network element, wherein the indication information indicates that an exception occurs when the first network element executes a first policy, and the first policy is a policy output by a first artificial intelligence AI model after the first network element inputs a to-be-input first measurement quantity into the first AI model; and
sending second information to a third network element, wherein the second information indicates that the exception occurs when the first policy is executed or an exception occurs when a first-type policy output by the first AI model is executed, and a type of the first policy is a first type.

10. The method according to claim 9, wherein the type of the first policy comprises any one of the following:
an energy saving policy, a load balancing policy, a mobility optimization policy, a channel state information-reference signal CSI-RS feedback enhancement policy, a beam management enhancement policy, or a positioning accuracy enhancement policy.

11. The method according to claim 9 or 10, wherein the indication information indicating that the exception occurs when the first policy is executed comprises one or more of the following:
an indication of the execution exception, time at which the execution exception occurs, a cause of the execution exception, a measurement parameter used for determining that the exception occurs on the policy, a configuration parameter used for determining that the exception occurs on the policy, effective time of the configuration parameter, a correction manner that the first network element expects to use for the execution exception, information needed for the correction manner that the first network element expects to use for the execution exception, an identifier of the first AI model, a parameter of the first AI model, an identifier of the first policy, the first policy, or effective time of the first policy.

12. The method according to any one of claims 9 to 11, wherein the third network element satisfies any one of the following conditions:
the third network element is executing the policy output by the first AI model;
the third network element is executing the first policy; or
the third network element is executing a fifth policy, wherein the fifth policy and the first policy are of a same type.

13. The method according to any one of claims 9 to 12, further comprising:
determining a correction manner that is allowed to be used for the execution exception; and
sending first information to the first network element, wherein the first information indicates the correction manner that is allowed to be used for the execution exception.

14. The method according to claim 13, wherein the correction manner that is allowed to be used comprises any one of the following:
executing a second policy, wherein the second policy is a policy obtained based on non-AI, and the second policy and the first policy are of a same type;
executing a third policy, wherein the third policy is a policy determined based on a second AI model, and the third policy and the first policy are of a same type; or
executing a fourth policy, wherein the fourth policy is a policy executed before the first policy, and the fourth policy and the first policy are of a same type.

15. The method according to claim 14, wherein when the correction manner that is allowed to be used is executing the third policy, the first information comprises at least one of the following:
an identifier of the third policy, the third policy, an identifier of the second AI model, a parameter of the second AI model, or performance information of the third network element, wherein the performance information of the third network element is used for determining the third policy.

16. The method according to claim 15, wherein that the performance information of the third network element is used for determining the third policy comprises:
the performance information of the third network element is used for correcting the first AI model, and a corrected first AI model is used for determining the third policy.

17. The method according to claim 15 or 16, further comprising:
receiving the performance information from the third network element.

18. The method according to any one of claims 9 to 17, wherein the first network element is a first access network device, the second network element is a core network element or an operation, administration, and maintenance OAM network element, and the third network element is a second access network device;
the first network element is a first terminal device, the second network element is an access network device, and the third network element is a second terminal device; or
the first network element is a terminal device, the second network element is a first access network device, and the third network element is a second access network device.

19. A communication method, applied to a third network element and comprising:
receiving second information from a second network element, wherein the second information indicates that an exception occurs when a first policy is executed or an exception occurs when a first-type policy output by a first AI model is executed, the first policy belongs to a first type, and the first policy is obtained based on the first AI model; and
sending performance information of the third network element to the second network element, and/or determining whether an exception occurs on a policy executed by the third network element.

20. A communication method, applied to a first network element and comprising:
obtaining a to-be-input first measurement quantity and obtaining a first AI model;
inputting the first measurement quantity into the first AI model, to obtain a first policy output by the first AI model;
executing the first policy;
when determining that an exception occurs when the first policy is executed, sending indication information to a third network element, wherein the indication information indicates that the exception occurs when the first policy is executed;
receiving performance information from the third network element; and
correcting the first policy or the first AI model based on the performance information of the third network element.

21. A communication method, applied to a third network element and comprising:
receiving indication information from a first network element, wherein the indication information indicates that an exception occurs when the first network element executes a first policy, and the first policy is a policy output by a first AI model after the first network element inputs a to-be-input first measurement quantity into the first AI model; and
sending performance information of the third network element to the first network element, and/or determining whether an exception occurs on a policy executed by the third network element.

22. A communication apparatus, comprising a functional module for implementing the method according to any one of claims 1 to 21.

23. A communication apparatus, comprising a processor, wherein the processor is coupled to a memory;
the memory is configured to store computer programs or instructions; and
the processor is configured to: execute some or all of the computer programs or the instructions in the memory, and when some or all of the computer programs or the instructions are executed, implement the method according to any one of claims 1 to 21.

24. A communication apparatus, comprising a processor and a memory, wherein
the memory is configured to store computer programs or instructions; and
the processor is configured to: execute some or all of the computer programs or the instructions in the memory, and when some or all of the computer programs or the instructions are executed, implement the method according to any one of claims 1 to 21.

25. A chip system, wherein the chip system comprises a processing circuit, and the processing circuit is coupled to a storage medium; and
the processing circuit is configured to: execute some or all of computer programs or instructions in the storage medium, and when some or all of the computer programs or the instructions are executed, implement the method according to any one of claims 1 to 21.

26. A computer-readable storage medium, configured to store a computer program, wherein the computer program comprises instructions for implementing the method according to any one of claims 1 to 21.

27. A computer program product, wherein the computer program product comprises computer program code, and when the computer program code is run on a computer, the computer is enabled to perform the method according to any one of claims 1 to 21.
